(19) Europäisches Patentamt
European Patent Office
Office européen des brevets

(11) EP 4 668 943 A1

(12) EUROPEAN PATENT APPLICATION
published in accordance with Art. 153(4) EPC

(43) Date of publication:
24.12.2025 Bulletin 2025/52

(51) International Patent Classification (IPC):
H04W 72/0446 (2023.01)     H04W 24/10 (2009.01)
H04L 25/02 (2006.01)

(21) Application number: 23921905.8

(52) Cooperative Patent Classification (CPC):
H04L 25/02; H04W 24/08; H04W 24/10;
H04W 72/0446; Y02D 30/70

(22) Date of filing: 16.02.2023

(86) International application number:
PCT/CN2023/076607

(87) International publication number:
WO 2024/168751 (22.08.2024 Gazette 2024/34)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Beijing Xiaomi Mobile Software Co.,
Ltd.
Beijing 100085 (CN)

(72) Inventor: GAO, Xueyuan
Beijing 100085 (CN)

(74) Representative: Stöckeler, Ferdinand et al
Schoppe, Zimmermann, Stöckeler
Zinkler, Schenk & Partner mbB
Patentanwälte
Radlkoferstrasse 2
81373 München (DE)

(54) **METHOD FOR REPORTING TIME DOMAIN CHANNEL PROPERTY (TDCP), APPARATUS, AND STORAGE MEDIUM**

(57) Embodiments of the present disclosure disclose a method for reporting a TDCP, and an apparatus, applicable to a communication system. The method comprises: determining a time domain correlation amplitude value set on the basis of a TRS burst configured by a network device, wherein the time domain correlation amplitude value set comprises time domain correlation amplitude values of different time intervals; and reporting, to the network device, the time domain correlation amplitude values of at least some of the time intervals in the time domain correlation amplitude value set. In the technical solution, a terminal determines time domain correlation amplitude values of different time intervals according to configured TRS resources, and in order to reduce uplink feedback overhead, the terminal may report the time domain correlation amplitude values of some of the time intervals to a network device. The network device may determine a current TDCP of the terminal on the basis of the received time domain correlation amplitude values of some of the time intervals.

determining a time domain correlation amplitude value set based on TRS bursts configured by a network device, wherein the time domain correlation amplitude value set comprises time domain correlation amplitude values corresponding to different time intervals — S201

reporting, to the network device, one or more time domain correlation amplitude values corresponding to at least part of the different time intervals in the time domain correlation amplitude value set — S202

**FIG. 2**

EP 4 668 943 A1

Description

TECHNICAL FIELD

The present disclosure relates to the field of communication technologies, and particularly to a method and an apparatus for reporting a time domain channel property (TDCP).

BACKGROUND

For a medium and high mobility terminal, also referred to as a user equipment (UE), the UE may perform channel estimation based on a tracking reference signal (TRS) resource, and then determine a time domain channel property (TDCP) of the UE based on the estimated channel and report the TDCP of the UE to a network device.

SUMMARY

Embodiments of the present disclosure proposes a method and an apparatus for reporting a TDCP and a storage medium, which may be applied in the field of communication technologies, and may report time domain correlation amplitude values for different time intervals to a network device, to realize that the network device may determine other time domain channel property parameters.

According to a first aspect, an embodiment of the present disclosure provides a method for reporting a TDCP. The method includes: determining a time domain correlation amplitude value set based on tracking reference signal (TRS) bursts configured by a network device, in which, the time domain correlation amplitude value set includes time domain correlation amplitude values corresponding to different time intervals; and reporting, to the network device, one or more time domain correlation amplitude values corresponding to at least part of the different time intervals in the time domain correlation amplitude value set.

In the technical solution, the terminal may determine the time domain correlation amplitude values corresponding to the different time intervals based on the configured TRS resources. In order to reduce uplink feedback overhead, the terminal may report the one or more time domain correlation amplitude values corresponding to the part of the different time intervals to the network device. The network device may determine a current TDCP of the terminal based on the received one or more time domain correlation amplitude values corresponding to the part of the different time intervals.

According to a second aspect, an embodiment of the present disclosure provides a method for reporting a TDCP. The method includes: configuring TRS bursts for a terminal for determining a time domain correlation amplitude value set, in which, the time domain correlation amplitude value set includes time domain correlation amplitude values corresponding to different time intervals; and receiving one or more time domain correlation amplitude values corresponding to at least part of the different time intervals in the time domain correlation amplitude value set reported by the terminal.

According to a third aspect, an embodiment of the present disclosure provides a communication device. The device has part or all of functions of the terminal for implementing the method as described in the first aspect. For example, functions of the communication device may have functions of implementing part or all of embodiments of the present disclosure, or may have functions of implementing any one of embodiments of the present disclosure separately. The functions may be implemented through hardware or by executing corresponding software through hardware. The hardware or software includes one or more units or modules corresponding to the above functions.

In an implementation method, a structure of the communication device may include a transceiver module and a processing module, and the processing module is configured to support the communication device in executing the corresponding functions in the above method. The transceiver module is used to support communication between the communication device and other devices. The communication device may further include a storage module, configured to be coupled with the transceiver module and the processing module, and store a computer programs and data necessary for the communication device.

As an example, the processing module may be a processor, the transceiver module may be a transceiver or a communication interface, and the storage module may be a memory.

According to a fourth aspect, an embodiment of the present disclosure provides a communication device. The device has part or all of functions of the terminal for implementing the method as described in the second aspect. For example, functions of the communication device may have functions of implementing part or all of embodiments of the present disclosure, or may have functions of implementing any one of embodiments of the present disclosure separately. The functions may be implemented through hardware or by executing corresponding software through hardware. The hardware or software includes one or more units or modules corresponding to the above functions.

In an implementation method, a structure of the communication device may include a transceiver module and a processing module, and the processing module is configured to support the communication device in executing the corresponding functions in the above method. The transceiver module is used to support communication between the communication device and other devices. The communication device may further include a storage module, configured to be coupled with the transceiver module and the processing module, and store a computer programs and data necessary for the communication device.

According to a fifth aspect, an embodiment of the present disclosure provides a communication device. The communication device includes a processor. The processor is configured to execute the method as described in the first aspect when invoking a computer program in memory.

According to a sixth aspect, an embodiment of the present disclosure provides a communication device. The communication device includes a processor. The processor is configured to execute the method as described in the second aspect when invoking a computer program in memory.

According to a seventh aspect, an embodiment of the present disclosure provides a communication device. The communication device includes a processor and a memory having a computer program stored thereon. The processor is configured to execute the computer program stored in the memory, causing the device to execute the method as described in the first aspect.

According to an eighth aspect, an embodiment of the present disclosure provides a communication device. The communication device includes a processor and a memory having a computer program stored thereon. The processor is configured to execute the computer program stored in the memory, causing the device to execute the method as described in the second aspect.

According to a ninth aspect, an embodiment of the present disclosure provides a communication device. The communication device includes a processor and an interface circuit. The interface circuit is configured to receive code instructions and transmit the code instructions to the processor. The processor is configured to run the code instructions to execute the method as described in the first aspect.

According to a tenth aspect, an embodiment of the present disclosure provides a communication device. The communication device includes a processor and an interface circuit. The interface circuit is configured to receive code instructions and transmit the code instructions to the processor. The processor is configured to run the code instructions to execute the method as described in the second aspect.

According to an eleventh aspect, an embodiment of the present disclosure provides a system for reporting a TDCP. The system includes the communication device as described in the third aspect and the communication device as described in the fourth aspect, or the system includes the communication device as described in the fifth aspect and the communication device as described in the sixth aspect, or the system includes the communication device as described in the seventh aspect and the communication device as described in the eighth aspect, or the system includes the communication device as described in the ninth aspect and the communication device as described in the tenth aspect.

According to a twelfth aspect, an embodiment of the present disclosure provides a computer-readable storage medium. The storage medium is configured to store instructions performed by the terminal as described above. The instructions may cause the terminal to implement the method as described in the first aspect when the instructions are executed.

According to a thirteenth aspect, an embodiment of the present disclosure provides a computer-readable storage medium. The storage medium is configured to store instructions performed by the network device as described above. The instructions may cause the network device to implement the method as described in the second aspect when the instructions are executed.

According to a fourteenth aspect, an embodiment of the present disclosure provides a computer program product including a computer program, causing a computer to implement the method as described in the first aspect when the computer program is running on the computer.

According to a fifteenth aspect, an embodiment of the present disclosure provides a computer program product including a computer program, causing a computer to implement the method as described in the second aspect when the computer program is running on the computer.

According to a sixteenth aspect, an embodiment of the present disclosure provides a chip system. The chip system includes at least one processor and an interface, and is configured to support a terminal to implement functions related to the first aspect, such as determining or processing at least one of data and information related to the above method. In a possible design, the chip system further includes a memory, configured to store a computer program and data necessary for the terminal. The chip system may be composed of chips or include a chip and other discrete devices.

According to a seventeenth aspect, an embodiment of the present disclosure provides a chip system. The chip system includes at least one processor and an interface, and is configured to support a network device to implement functions related to the second aspect, such as determining or processing at least one of data and information related to the above method. In a possible design, the chip system further includes a memory, configured to store a computer program and data necessary for the network device. The chip system may be composed of chips or include a chip and other discrete devices.

According to an eighteenth aspect, an embodiment of the present disclosure provides a computer program, causing a computer to implement the method as described in the first aspect when running on the computer.

According to a nineteenth aspect, an embodiment of the present disclosure provides a computer program, causing a computer to implement the method as described in the second aspect when running on the computer.

## BRIEF DESCRIPTION OF THE DRAWINGS

In order to explain the technical solutions in embodiments of the present disclosure or the background, the accompanying drawings required in embodiments of the present disclosure or the background will be explained below.

FIG. 1 is a schematic diagram illustrating an architecture of a communication system provided in an embodiment of the present disclosure.
FIG. 2 is a flowchart illustrating a method for reporting a TDCP according to an embodiment of the present disclosure.
FIG. 2a is a schematic diagram illustrating a time domain structure of a TRS burst according to an embodiment of the present disclosure.
FIG. 3 is a flowchart illustrating a method for reporting a TDCP according to an embodiment of the present disclosure.
FIG. 4 is a flowchart illustrating a method for reporting a TDCP according to an embodiment of the present disclosure.
FIG. 5 is a flowchart illustrating a method for reporting a TDCP according to an embodiment of the present disclosure.
FIG. 6 is a flowchart illustrating a method for reporting a TDCP according to an embodiment of the present disclosure.
FIG. 6a is a schematic diagram illustrating reporting of a TDCP according to an embodiment of the present disclosure.
FIG. 6b is a schematic diagram illustrating reporting of a TDCP according to an embodiment of the present disclosure.
FIG. 7 is a flowchart illustrating a method for reporting a TDCP according to an embodiment of the present disclosure.
FIG. 8 is a schematic diagram illustrating reporting of a TDCP according to an embodiment of the present disclosure.
FIG. 9 is a schematic diagram illustrating reporting of a TDCP according to an embodiment of the present disclosure.
FIG. 10 is a flowchart illustrating a method for reporting a TDCP according to an embodiment of the present disclosure.
FIG. 11 is a flowchart illustrating a method for reporting a TDCP according to an embodiment of the present disclosure.
FIG. 12 is a flowchart illustrating a method for reporting a TDCP according to an embodiment of the present disclosure.
FIG. 13 is a flowchart illustrating a method for reporting a TDCP according to an embodiment of the present disclosure.
FIG. 14 is a flowchart illustrating a method for reporting a TDCP according to an embodiment of the present disclosure.
FIG. 15 is a flowchart illustrating a method for reporting a TDCP according to an embodiment of the present disclosure.
FIG. 16 is a block diagram illustrating a communication device according to an embodiment of the present disclosure.
FIG. 17 is a block diagram illustrating a communication device according to another embodiment of the present disclosure.
FIG. 18 is a block diagram illustrating a chip according to an embodiment of the present disclosure.

## DETAILED DESCRIPTION

Embodiments will be described in detail herein, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with embodiments of the disclosure. Instead, they are merely examples of apparatuses and methods consistent with aspects related to the disclosure as recited in the appended claims.

The terms used in embodiments of the present disclosure are only for the purpose of describing specific embodiments, and are not intended to limit embodiments of the present disclosure. The singular forms "a" and "the" used in embodiments of the present disclosure and the appended claims are also intended to include plural forms unless the context clearly indicates otherwise. It is also understood that the term "and/or" as used herein refers to and includes any and all possible combinations of one or more of associated listed items.

It should be understood that, although the terms first, second, third, etc. may be used in embodiments of the present disclosure to describe various information, such information shall not be limited to these terms. These terms are only used to distinguish the same category of information. For example, subject to the scope of embodiments of the present disclosure, first information may also be referred to as second information, and similarly, second information may also be referred to as first information. It depends on the context. For example, the word "if" as used herein may be interpreted as "upon" or "when" or "in response to determining". For the purposes of brevity and ease of understanding, the disclosure uses the terms "greater than" or "less than", "higher than" or "lower than" herein in a case of characterizing a size relationship. Those skilled in the art may understand that: the term "greater than" also covers the meaning of "greater than or equal to", and the term "less than" also covers the meaning of "less than or equal to"; the term "higher than" covers the meaning of "higher than or equal to", the term "less than" also covers the meaning of "less than or equal to".

To facilitate understanding, terms involved in the disclosure are introduced first.

According to a time domain structure design of a TRS, for FR1, an upper layer may configure one CSI-RS resource set including four periods of CSI-RS resources for a UE within one TRS period. The CSI-RS resources included in the CSI-RS resource set may be called TRS resources. These four resources are distributed in two consecutive slots, each slot includes two periods of TRS resources, and the CSI-RS resources in these two slots have the same position in the time domain, and each TRS resource corresponds to one OFDM (orthogonal frequency division multiplexing) symbol. For FR1, each slot includes 14 OFDM symbols. The time domain position of the TRS resource in one slot has the following options: $l \in \{4,8\}$, $l \in \{5,9\}$, or $l \in \{6,10\}$, $l$ represents an index of an OFDM symbol where a TRS resource is located, that is, a symbol position where the TRS resource is located may be determined based on the index of the symbol. Noted that a starting position of $l$ starts from 0. The TRS period may be configured as 10ms, 20ms, 40ms and 80ms. The TRS resources may be configured as periodic TRS resources and aperiodic TRS resources. A time domain position of the periodic TRS resource and a time domain position of the aperiodic TRS resource may be the same or different. Furthermore, the UE may perform channel estimation based on TRS bursts configured by a network device, and a TDCP of the UE may be obtained based on the estimated channel. The TDCP may include a difference between a maximum Doppler spread value and a minimum Doppler spread value corresponding to different transmission delays, Doppler spread values corresponding to M strongest peaks in a wideband Doppler spectrum, M = 1, 2, 3..., which are parameters configured on the network side and time domain correlation amplitude values for different time intervals.

In order to better understand a method for reporting a TDCP according to an embodiment of the present disclosure, a communication system to which embodiments of the present disclosure are applicable is first described below.

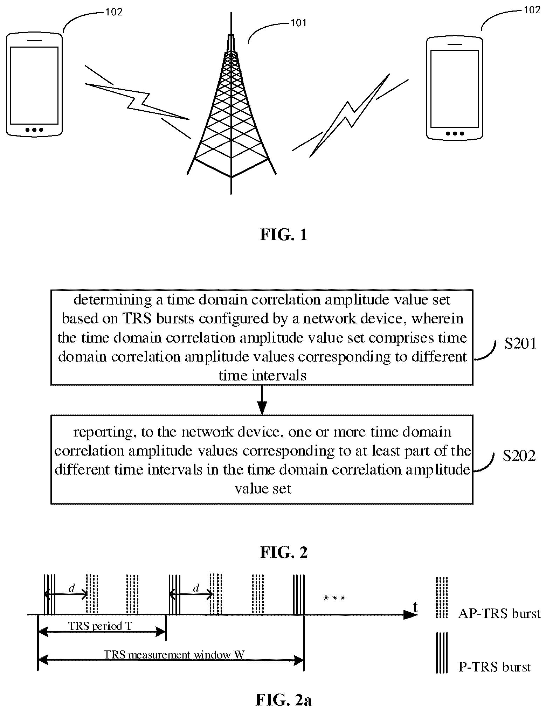

Please refer to FIG. 1, FIG. 1 is a structural diagram of a communication system provided by an embodiment of the disclosure. The communication system may include, but is not limited to, one network device and one terminal. The number and the form of devices illustrated in FIG. 1 are only for examples and do not constitute a limitation on the embodiments of the disclosure. The communication system may include two or more network devices and two or more terminals in practical applications. The communication system illustrated in FIG. 1 includes, for example, a network device 101 and a terminal 102.

It needs to be noted that the technical solution in embodiments of the present disclosure is applicable to various communication systems. For example, a 3th generation (3G) universal mobile telecommunication system (UMTS), a long term evolution (LTE) system, a 5th generation (5G) mobile communication system, a 5G new radio (NR) system, a 6th generation (6G) mobile communication system, or other future new mobile communication systems.

The network device 101 in embodiments of the disclosure is an entity on a network side for transmitting or receiving signals. For example, the network device 101 may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network device are not limited in the embodiments of the disclosure. The network device according to the embodiments of the disclosure may be composed of a central unit (CU) and distributed units (DUs). The CU may also be referred to as a control unit. The use of CU-DU structure allows to divide a protocol layer of the network device, such as a base station, such that some of the protocol layer functions are placed in the CU for centralized control, and some or all of the remaining protocol layer functions are distributed in the DUs, and the DUs are centrally controlled by the CU.

The terminal 102 in embodiments of the disclosure is an entity on a user side for receiving or transmitting signals, such as a cellular phone. The terminal may also be referred to as a terminal, a user equipment (UE), a mobile station (MS), a mobile terminal (MT), and the like. The terminal may be a car with communication functions, a smart car, a mobile phone, a wearable device, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in the embodiments of the disclosure.

It is understandable that the communication system described in embodiments of the disclosure is intended to clearly illustrate the technical solutions according to the embodiments of the disclosure, and does not constitute a limitation on the technical solutions according to the embodiments of the disclosure. It is understandable by those skilled in the art that as system architectures evolve and new business scenarios emerge, the technical solutions according to the embodiments of the disclosure are also applicable to similar technical problems.

It should be noted that a method for reporting a TDCP provided by any embodiment of the present disclosure may be executed alone, or may be executed in combination with possible implementation methods in other embodiments, or may be executed in combination with any technical solution in related arts.

A method for reporting a TDCP and a device thereof provided by the present disclosure will be introduced in detail below with reference to the accompanying drawings.

Please refer to FIG. 2, FIG. 2 is a flowchart illustrating a method for reporting a TDCP according to an embodiment of the present disclosure. The method for reporting the TDCP may be performed by a terminal. As illustrated in FIG. 2, the method may include, but is not limited to, the following steps.

At step S201, a time domain correlation amplitude value set is determined based on TRS bursts configured by a network device. The time domain correlation amplitude value set includes time domain correlation amplitude values corresponding to different time intervals.

In some implementations, the network device may configure the TRS bursts for the terminal. Number of TRS bursts configured by network device may be determined based on a protocol agreement or a network configuration. For example, M TRS bursts may be configured, where M is an integer greater than or equal to 2. In some implementations, the M TRS bursts include periodic TRS bursts (P-TRS burst) and/or aperiodic TRS bursts (AP-TRS burst), and there is a time interval with at least one time unit between adjacent TRS bursts.

It should be noted that each TRS burst may include a channel-state-information reference signal (CSI-RS) resource, and the CSI-RS resource included in the TRS burst may be referred to as a TRS resource in the present disclosure, and this description is applicable to subsequent embodiments. Number of TRS resources included in the TRS burst may be configured by a network device or provided based on a protocol agreement.

In some implementations, the time unit may be a slot, a symbol, a subframe, etc. In the following embodiments of the present disclosure, the time unit is taken as a slot as an example to explain a configuration process of the TRS burst.

In some implementations, the M TRS bursts include the periodic TRS bursts and/or the aperiodic TRS bursts. For example, the M TRS bursts may include only M periodic TRS bursts. For example, the M TRS bursts may include only M aperiodic TRS bursts, For example, the M TRS bursts may include N periodic TRS bursts and M-N aperiodic TRS bursts, where N is an integer greater than or equal to 1, and N$\leq$M.

It should be noted that the time interval between adjacent TRS bursts is an interval between a first slot corresponding to first one or two TRS resources in TRS resources included in a TRS resource set corresponding to the previous TRS burst and a first slot corresponding to first one or two TRS resources in TRS resources included in a TRS resource set corresponding to the next TRS burst.

Each of the periodic TRS burst and the aperiodic TRS burst includes two slots, two TRS resources are transmitted on the TRS burst, and the two TRS resources are spaced by a preset number of OFDM symbols.

In some implementations, the network device may uniformly configure M TRS bursts for the terminal, as shown in FIG. 2a, that is, time intervals between the M TRS bursts are configured to be the same. For example, a time interval between an i-th TRS burst and an (i+1)-th TRS burst may be configured to be d slots, where d is an integer greater than or equal to 1, and i is an integer greater than or equal to 0.

In some implementations, the M TRS bursts may be TRS bursts within one TRS measurement window. The TRS measurement window includes: a starting point and a measurement length of the measurement window. The starting point and the measurement length of the measurement window may be predefined or configured by the network. For example, a first slot within one period may be predefined as the starting point of the window.

For example, the time interval between adjacent TRS bursts may be configured by the network device or provided based on a protocol agreement.

In some implementations, the terminal may determine the time domain correlation amplitude values corresponding to the different time intervals based on the TRS bursts configured by the network device. The time domain correlation amplitude value refers to an amplitude of a value obtained by cross-correlation calculation of channels corresponding to two different time points. Channel correlation corresponding to different time points may be measured by the time domain correlation amplitude value.

At step S202, one or more time domain correlation amplitude values corresponding to at least part of the different time intervals in the time domain correlation amplitude value set is reported to the network device.

In an embodiment of the present disclosure, the terminal may receive the TRS bursts configured by the network device, further, perform channel estimation based on the configured TRS bursts, determine a TDCP based on the estimated channel, and report the TDCP to the network device. In some implementations, in order to reduce signaling overhead, the terminal may report channel correlation amplitude values for different time intervals in the TDCP to the network device. In some implementations, the terminal may determine one time domain correlation amplitude value set based on the configured TRS bursts. The time domain correlation amplitude value set includes the time domain correlation amplitude values corresponding to the different time intervals. The terminal may report the one or more time domain correlation amplitude values corresponding to at least part of the different time intervals in the time domain correlation amplitude value set to the network device.

In an example, the terminal may report, to the network device, time domain correlation amplitude values for all of the different time intervals in the time domain correlation amplitude value set. In an example, the terminal may report, to the network device, one or more time domain correlation amplitude values corresponding to a part of the different time intervals in the time domain correlation amplitude value set.

In some implementations, the terminal may determine the part of the different time intervals based on a network indication or a protocol agreement, and report, to the network device, the one or more time domain correlation amplitude values corresponding to the part of the different time intervals. For example, the terminal may report time domain correlation amplitude values corresponding to N time intervals to the network device based on the indication or the protocol agreement, for example, time domain correlation amplitude values corresponding to first N time intervals or domain correlation amplitude values corresponding to last N time intervals may be reported in sequence. For another example, the terminal may determine that the part of the different time intervals are one or more specified time intervals based on the indication or the protocol agreement, and report the time domain correlation amplitude values corresponding to the one or more specified time intervals to the network device. For example, the specified time interval may be 4 symbols, or the terminal reports a time interval corresponding to an even index or an odd index to the network device.

That is, number of the time domain correlation amplitude values corresponding to the part of the different time intervals reported by the terminal may be determined by the terminal and/or reported to the network device. Or, number of the time domain correlation amplitude values corresponding to the part of the different time intervals reported by the terminal may be configured or indicated by the network device, or predefined by negotiation between the terminal and the network device.

After receiving the reported time domain correlation amplitude values corresponding to at least part of the different time intervals, the network device may calculate unreported time domain correlation amplitude values by an interpolation algorithm based on the reported time domain correlation amplitude value. It may be understood that the unreported time domain correlation amplitude values may include time domain correlation amplitude values that are not transmitted in certain TRSs, or time domain correlation amplitude values that are not included in the TDCP and not reported based on the TRS.

In an example, after receiving the one or more reported time domain correlation amplitude values corresponding to the at least part of the different time intervals, the network device may determine other information in the TDCP based on the reported one or more time domain correlation amplitude values, such as a difference between a maximum Doppler spread value and a minimum Doppler spread value corresponding to different transmission delays, Doppler spread values corresponding to M strongest peaks in a wideband Doppler spectrum, etc.

As an example, the network device may calculate the Doppler spread value according to the following formula (1):

$$A(\tau) = 1 + \frac{A''(0)}{2} \cdot \tau^2 + \mathcal{O}(\tau^4) = 1 - 2\pi^2 f_d^2 \cdot \tau^2 + \mathcal{O}(\tau^4) \qquad (1)$$

where $\tau$ represents a time interval, $A(\tau)$ represents a time domain correlation amplitude value corresponding to the time interval $\tau$, and $f_d$ represents a Doppler spread value corresponding to the time interval $\tau$.

Furthermore, the network device determines which codebook of Type 1 and Type II to be taken as precoding for data transmission based on the TDCP of the UE. Or, the network device configures, according to the TDCP of the UE. An SRS (sounding reference signal) sending period value based on SRS channel reciprocity. Or, the network device performs CSI prediction in a TDD system based on the TDCP of the UE.

In an embodiment of the present disclosure, the terminal may determine the time domain correlation amplitude values corresponding to the different time intervals based on the configured TRS resources. In order to reduce uplink feedback overhead, the terminal may report the one or more time domain correlation amplitude values corresponding to the part of the different time intervals to the network device. The network device may determine a current TDCP of the terminal based on the received one or more time domain correlation amplitude values corresponding to the part of the different time intervals.

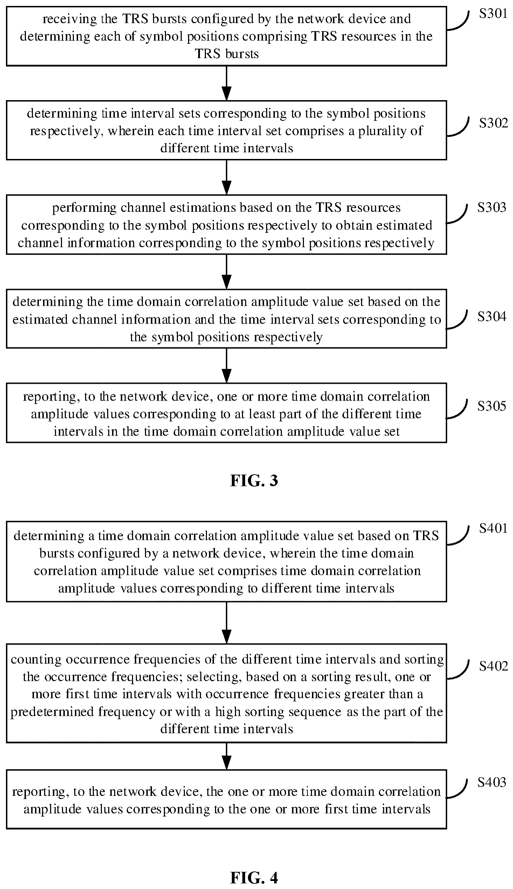

Please refer to FIG. 3, FIG. 3 is a flowchart illustrating a method for reporting a TDCP according to an embodiment of the present disclosure. The method for reporting the TDCP may be performed by a terminal. As illustrated in FIG. 3, the method may include, but is not limited to, the following steps.

At step S301, the TRS bursts configured by the network device are received, and each of symbol positions including TRS resources in the TRS bursts is determined.

After receiving the TRS bursts configured by the network device, a slot where each TRS burst is located may be determined. Further, the symbol positions where the TRS resources included in the TRS bursts are located may be determined based on the protocol agreement or network configuration.

At step S302, time interval sets corresponding to the symbol positions respectively are determined, in which, each time interval set includes a plurality of different time intervals.

In some implementations, all symbol positions including the TRS resources in the TRS bursts may be traversed, and for a currently traversed symbol position, time intervals between remaining symbol positions and the currently traversed symbol position may be determined based on the currently traversed symbol position and the remaining symbol positions, further a time interval set corresponding to the currently traversed symbol position may be obtained.

For example, there are N symbol positions, an i-th symbol position is the currently traversed symbol position, and time intervals between respective remaining symbol positions in the N symbol positions and the i-th symbol position is calculated to obtain the time interval set corresponding to the i-th symbol position. It can be understood that each symbol position corresponding to one time interval set.

At step S303, channel estimations are performed based on the TRS resources corresponding to the symbol positions respectively to obtain estimated channel information corresponding to the symbol positions respectively.

In an embodiment of the present disclosure, the terminal may perform the channel estimation based on the TRS resources corresponding to the symbol positions respectively to obtain the estimated channel information corresponding to the symbol positions respectively.

At step S304, the time domain correlation amplitude value set is determined based on the estimated channel information and the time interval sets corresponding to the symbol positions respectively.

In some implementations, the terminal may obtain the time domain correlation amplitude values for different time intervals corresponding to each symbol position. It is understandable that different symbol positions may correspond to the same time interval. In an embodiment of the present disclosure, for each symbol position, candidate time domain correlation amplitude values for each time interval corresponding to each symbol position may be determined based on the estimated channel information corresponding to the each symbol position and each time interval in the time interval set corresponding to the each symbol position. It is understandable that each symbol position may correspond to one time interval set, and the time interval set may include one or more different time intervals. Each time interval corresponds to one time domain correlation amplitude value.

In an example, in some implementations, after obtaining the estimated channel information corresponding to each symbol position and the corresponding time interval set, the terminal may determine the time domain correlation amplitude values for different time intervals corresponding to each symbol position according to the estimated channel information and the following formula (2):

$$A(t, \tau_i) \approx \frac{\left|\sum_{n=0}^{N-1} X_n(t+\tau_i) \cdot X_n^*(t)\right|}{\frac{1}{2} \cdot \sum_{n=0}^{N-1} \left(X_n(t) \cdot X_n^*(t) + X_n(t+\tau_i) \cdot X_n^*(t+\tau_i)\right)} \qquad (2)$$

where N represents number of subcarriers where the TRS resource is located, n represents a n-th subcarrier where the TRS resource is located, $A(t, \tau_i)$ represents a time domain correlation amplitude value for a time interval $\tau_i$ corresponding to a t-th symbol position, $X_n(t)$ represents estimated channel information corresponding to the t-th symbol position, $X_n^*(t)$ represents a conjugate of $X_n(t)$, $X_n(t + \tau_i)$ represents estimated channel information based on the TRS resource corresponding to a $(t + \tau_i)$-th symbol, $X_n^*(t + \tau_i)$ represents a conjugate of $X_n(t + \tau_i)$.

Further, the candidate time domain correlation amplitude values corresponding to the each time interval are processed to obtain a time domain correlation amplitude value corresponding to the each time interval. For example, all candidate time domain correlation amplitude values corresponding to the each time interval may be averaged to obtain the time domain correlation amplitude value corresponding to the each time interval. For another example, a maximum time domain correlation amplitude value, or a minimum candidate time domain correlation amplitude value, or a candidate time domain correlation amplitude value with an occurrence frequency among all candidate time domain correlation amplitude values corresponding to the each time interval is selected as the time domain correlation amplitude value corresponding to the each time interval.

At step S305, one or more time domain correlation amplitude values corresponding to at least part of the different time intervals in the time domain correlation amplitude value set is reported to the network device.

In an example, the terminal may report, to the network device, time domain correlation amplitude values for all of the different time intervals in the time domain correlation amplitude value set. In an example, the terminal may report, to the network device, one or more time domain correlation amplitude values corresponding to a part of the different time intervals in the time domain correlation amplitude value set. In an example, number of the time domain correlation amplitude values corresponding to the part of the different time intervals reported by the terminal may be determined by the terminal and/or reported to the network device. Or, number of the time domain correlation amplitude values corresponding to the part of the different time intervals reported by the terminal may be configured or indicated by the network device, or predefined by negotiation between the terminal and the network device. The terminal may report N to the network device via $\lceil \log_2^{N-1} \rceil$, where N is number of the part of the different time intervals.

In this embodiment of the present disclosure, an implementation of the step S305 may be implemented by any implementation in respective embodiments of the present disclosure, which is not limited herein and details will not be repeated.

In an embodiment of the present disclosure, the terminal may determine the time domain correlation amplitude values corresponding to the different time intervals based on the configured TRS resources. In order to reduce uplink feedback overhead, the terminal may report the one or more time domain correlation amplitude values corresponding to the part of the different time intervals to the network device. The network device may determine other information in the TDCP based on the reported one or more time domain correlation amplitude values corresponding to the part of the different time intervals, thus reducing signaling and resource overhead.

Please refer to FIG. 4, FIG. 4 is a flowchart illustrating a method for reporting a TDCP according to an embodiment of the present disclosure. The method for reporting the TDCP may be performed by a terminal. As illustrated in FIG. 4, the method may include, but is not limited to, the following steps.

At step S401, a time domain correlation amplitude value set is determined based on TRS bursts configured by a network device. The time domain correlation amplitude value set includes time domain correlation amplitude values corresponding to different time intervals.

In this embodiment of the present disclosure, an implementation of the step S401 may be implemented by any implementation in respective embodiments of the present disclosure, which is not limited herein and details will not be repeated.

At step S402, occurrence frequencies of the different time intervals are counted and the occurrence frequencies are sorted, and one or more first time intervals with occurrence frequencies greater than a predetermined frequency or with a high sorting sequence are selected based on a sorting result as the part of the different time intervals.

In an embodiment of the present disclosure, the time interval set corresponding to each symbol position may be obtained, and each time interval set includes different time intervals corresponding to the symbol position. It is understandable that different symbol positions may correspond to the same time interval. In an example, the terminal may count the occurrence frequencies of time intervals in time interval sets corresponding to all symbol positions to obtain the occurrence frequency of each time interval, and determine the part of the different time intervals to be reported based on the occurrence frequencies of the time intervals.

In some implementations, the occurrence frequencies may be sorted in descending order, and the one or more time intervals with a high sorting sequence may be selected. In an embodiment of the present disclosure, the selected one or more time intervals with a high sorting sequence is called as the first time interval, and the terminal may take the first time interval as the part of the different time intervals to be reported.

In another implementation, a predetermined frequency may be pre-configured or provided by a protocol agreement, the occurrence frequencies of the time intervals may be compared with the predetermined frequency, and one or more time interval with the occurrence frequencies greater than the predetermined frequency are selected. In an embodiment of the present disclosure, the one or more time interval with the occurrence frequencies greater than the predetermined frequency is referred to as the first time interval, and the terminal may take the first time interval as the part of the different time intervals to be reported.

In an example, number of first time intervals may be provided by a network configuration or a protocol agreement, or may be determined by the terminal and reported to the network device. For example, the terminal may report N to the network device via $\lceil \log_2^{N-1} \rceil$, where N is number of the first time intervals.

At step S403, the one or more time domain correlation amplitude values corresponding to the one or more first time intervals are reported to the network device.

In some implementations, the terminal may uniformly quantize the one or more time domain correlation amplitude values corresponding to the one or more first time intervals using X bits to obtain quantization information of the one or more time domain correlation amplitude values corresponding to the one or more first time intervals.

In some other implementations, the terminal may non-uniformly quantize the one or more time domain correlation amplitude values corresponding to the one or more first time intervals using X bits, to obtain quantization information of the one or more time domain correlation amplitude values corresponding to the one or more first time intervals. For example, the one or more time domain correlation amplitude values corresponding to the one or more first time intervals to be reported may be exponentially quantized.

In some other implementations, the terminal may perform multi-step quantization on the one or more time domain correlation amplitude values corresponding to the one or more first time intervals to obtain the quantization information of the one or more time domain correlation amplitude values corresponding to the one or more first time intervals. For example, the one or more time domain correlation amplitude values corresponding to the one or more first time intervals may be quantized in two steps, and a first step uses X bits for quantization and a second step uses Y bits for quantization.

Furthermore, the terminal may report the quantization information of the one or more time domain correlation amplitude values corresponding to the one or more first time intervals to the network device.

In an embodiment of the present disclosure, the terminal may determine the time domain correlation amplitude values corresponding to the different time intervals based on the configured TRS resources. In order to reduce uplink feedback overhead, the terminal may report the one or more time domain correlation amplitude values corresponding to the part of the different time intervals to the network device. The network device may determine other information in the TDCP based on the reported one or more time domain correlation amplitude values corresponding to the part of the different time intervals to the network device, thus reducing signaling and resource overhead. Moreover, by means of quantizing the time domain correlation amplitude value to be reported, it is possible to ensure that the network device obtains the TDCP with a certain accuracy without increasing reporting overhead.

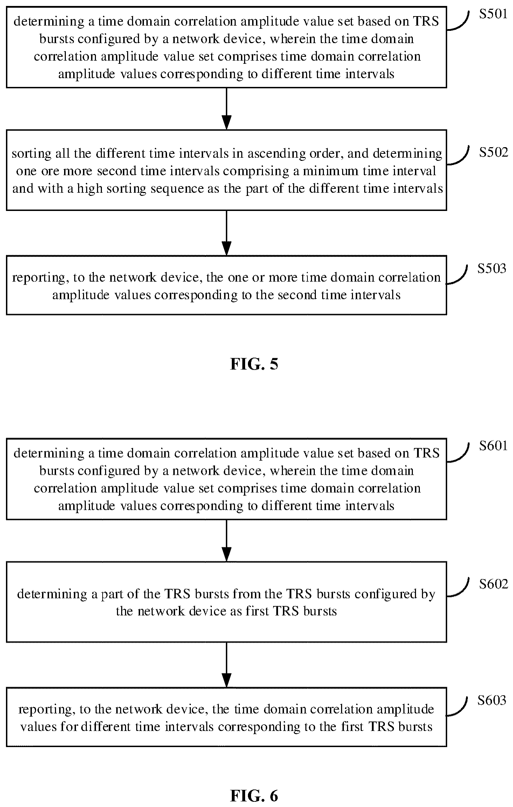

Please refer to FIG. 5, FIG. 5 is a flowchart illustrating a method for reporting a TDCP according to an embodiment of the present disclosure. The method for reporting the TDCP may be performed by a terminal. As illustrated in FIG. 5, the method may include, but is not limited to, the following steps.

At step S501, a time domain correlation amplitude value set is determined based on TRS bursts configured by a network device. The time domain correlation amplitude value set includes time domain correlation amplitude values corresponding to different time intervals.

In this embodiment of the present disclosure, an implementation of the step S501 may be implemented by any implementation in respective embodiments of the present disclosure, which is not limited herein and details will not be repeated.

At step S502, all of the different time intervals are sorted in ascending order, and one or more second time intervals comprising a minimum time interval and with a high sorting sequence are determined as the part of the different time intervals.

In an embodiment of the present disclosure, the time interval set corresponding to each symbol position may be obtained, and each time interval set includes different time intervals corresponding to the symbol position. All of the different time intervals may be obtained cased on the time interval set corresponding to each symbol position. Further, the terminal may sort all of the different time intervals in ascending order. In an embodiment of the present disclosure, the terminal may report the one or more second time intervals comprising a minimum time interval and with a high sorting sequence, referred to as the second time interval. The terminal may take the second time interval as the part of the different time intervals to be reported.

In an example, number of second time intervals may be provided by a network configuration or a protocol agreement, or may be determined by the terminal and reported to the network device. For example, the terminal may report N to the network device via $\lceil \log_2^{N-1} \rceil$, where N is number of the second time intervals.

At step S503, the one or more time domain correlation amplitude values corresponding to the one or more second time intervals are reported to the network device.

In some implementations, the terminal may uniformly quantize the one or more time domain correlation amplitude values corresponding to the one or more second time intervals using X bits to obtain quantization information of the one or more time domain correlation amplitude values corresponding to the one or more second time intervals.

In some other implementations, the terminal may perform multi-step quantization on the one or more time domain correlation amplitude values corresponding to the one or more second time intervals to obtain the quantization information of the one or more time domain correlation amplitude values corresponding to the one or more second time intervals.

Furthermore, the terminal may report the quantization information of the one or more time domain correlation amplitude values corresponding to the one or more second time intervals to the network device.

In an embodiment of the present disclosure, the terminal may determine the time domain correlation amplitude values corresponding to the different time intervals based on the configured TRS resources. In order to reduce uplink feedback overhead, the terminal may report the one or more time domain correlation amplitude values corresponding to the part of the different time intervals to the network device. The network device may determine other information in the TDCP based on the reported one or more time domain correlation amplitude values corresponding to the part of the different time intervals to the network device, thus reducing signaling and resource overhead. Moreover, by means of quantizing the time domain correlation amplitude value to be reported, it is possible to ensure that the network device obtains the TDCP with a certain accuracy without increasing reporting overhead.

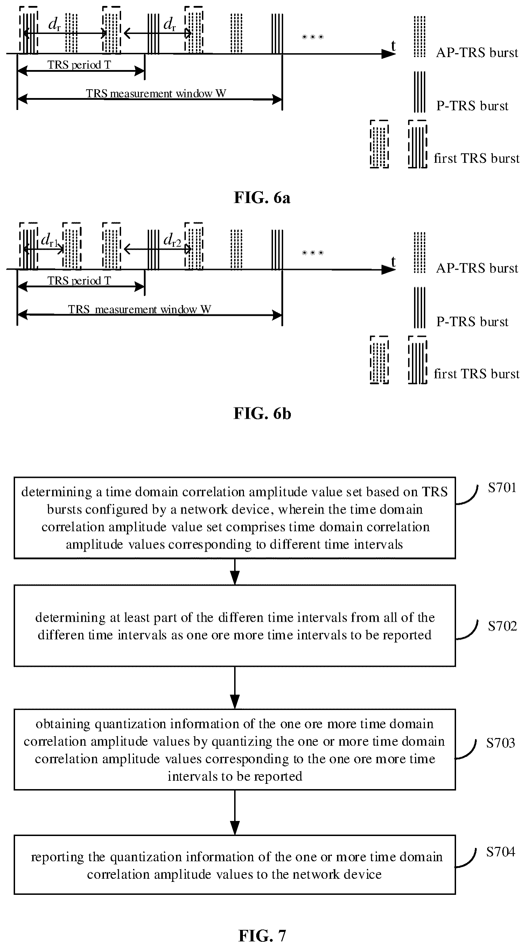

Please refer to FIG. 6, FIG. 6 is a flowchart illustrating a method for reporting a TDCP according to an embodiment of the present disclosure. The method for reporting the TDCP may be performed by a terminal. As illustrated in FIG. 6, the method may include, but is not limited to, the following steps.

At step S601, a time domain correlation amplitude value set is determined based on TRS bursts configured by a network device. The time domain correlation amplitude value set includes time domain correlation amplitude values corresponding to different time intervals.

In this embodiment of the present disclosure, an implementation of the step S601 may be implemented by any implementation in respective embodiments of the present disclosure, which is not limited herein and details will not be repeated.

At step S602, a part of the TRS bursts are determined from the TRS bursts configured by the network device as first TRS bursts

In an example, the network device may uniformly configure M TRS bursts for the terminal, that is, time intervals between adjacent TRS bursts are the same. It should be noted that in this embodiment of the present disclosure, time intervals between TRS bursts are referred to as burst intervals.

In some implementations, the terminal may uniformly determine the first TRS bursts from the M TRS bursts configured by the network device. In an example, the terminal may uniformly determine N first TRS bursts from the M TRS bursts according to the same burst interval.

As shown in FIG. 6a, the network device may uniformly configure 7 TRS bursts corresponding to the terminal within a TRS measurement window, and may determine 3 TRS bursts among the 7 TRS bursts as the first TRS bursts to be reported. The first TRS bursts to be reported include a 1st TRS burst, a 3rd TRS burst and a 5th TRS burst, and a burst interval between an i-th first TRS burst and an (i+1)-th first TRS burst to be reported is $d_r$. A burst interval between adjacent first TRS bursts is an integral multiple of the burst interval between adjacent TRS bursts. As shown in FIG. 6a, the burst interval between adjacent first TRS bursts may be twice the burst interval between adjacent TRS bursts.

In some other implementations, the terminal may non-uniformly determine the first TRS bursts from the M TRS bursts configured by the network device. In an example, the terminal may non-uniformly determine N first TRS bursts from the M TRS bursts according to different burst intervals. For example, a burst interval between an i-th first TRS burst and an (i+1)-th first TRS burst to be reported is $d_1$, and a burst interval between an (i+1)-th first TRS burst and an (i+2)-th first TRS burst to be reported is $d_2$.

In some other implementations, the terminal may group the TRS bursts configured by the network device, and determine the first TRS burst in the group from the TRS bursts in the same group, and the burst intervals between adjacent first TRS bursts in at least two groups in different groups are different. That is, the terminal may group M TRS bursts, and may select one or more TRS bursts in different groups as the first TRS burst, and the burst intervals between the first TRS bursts in respective groups are different. For example, a 1st TRS burst to a N1-th TRS burst are taken as a first group, and the 1st TRS burst and a 2nd TRS burst are selected as the first TRS bursts in the first group, and a burst interval between the first TRS bursts in the first group is dr1. A (N1+1)-th TRS burst and a (N1+2)-th TRS burst in the second group are selected as the first TRS bursts in the second group, and a burst interval of the first TRS bursts in the second group is dr2.

As shown in FIG. 6b, the network device may uniformly configure 7 TRS bursts corresponding to the terminal within a TRS measurement window, and may determine 3 TRS bursts among the 7 TRS bursts as the first TRS bursts to be reported. The first TRS bursts to be reported include a 1st TRS burst, a 3rd TRS burst and a 5th TRS burst, and a burst interval between a 1st first TRS burst (1st TRS burst) and a 2nd first TRS burst (2nd TRS burst) in the first group is $d_{r1}$, and a burst interval between the 1st first TRS burst (3rd TRS burst) and the 2nd first TRS burst (5th TRS burst) in the second group is $d_{r2}$. As shown in FIG. 6b, burst intervals between adjacent first TRS bursts in two groups are different, so that the time domain correlation amplitude values corresponding to different time intervals may be reported to the network device non-uniformly.

At step S603, the time domain correlation amplitude values for different time intervals corresponding to the first TRS bursts are reported to the network device.

In some implementations, after determining the first TRS bursts, the terminal may report the time domain correlation amplitude values for the different time intervals corresponding to the first TRS bursts to the network device. It is understandable that the first TRS burst includes one or more TRS resources, and the symbol positions corresponding to the respective TRS resources may correspond to different time intervals. The terminal may obtain the different time intervals corresponding to the symbol positions including the TRS resources in each first TRS burst, as well as the time domain correlation amplitude value corresponding to each time interval, and report them to the network device.

In an embodiment of the present disclosure, the terminal may determine the time domain correlation amplitude values corresponding to the different time intervals based on the configured TRS resources. In order to reduce uplink feedback overhead, the terminal may report the one or more time domain correlation amplitude values corresponding to the part of the different time intervals to the network device. The network device may determine other information in the TDCP based on the reported one or more time domain correlation amplitude values corresponding to the part of the different time intervals to the network device, thus reducing signaling and resource overhead.

Please refer to FIG. 7, FIG. 7 is a flowchart illustrating a method for reporting a TDCP according to an embodiment of the present disclosure. The method for reporting the TDCP may be performed by a terminal. As illustrated in FIG. 7, the method may include, but is not limited to, the following steps.

At step S701, a time domain correlation amplitude value set is determined based on TRS bursts configured by a network device. The time domain correlation amplitude value set includes time domain correlation amplitude values corresponding to different time intervals.

In this embodiment of the present disclosure, an implementation of the step S701 may be implemented by any implementation in respective embodiments of the present disclosure, which is not limited herein and details will not be repeated.

At step S702, at least part of the different time intervals are determined from all of the different time intervals as one or more time intervals to be reported.

In this embodiment of the present disclosure, an implementation of the step S702 may be implemented by any implementation in respective embodiments of the present disclosure, which is not limited herein and will not be repeated.

At step S703, quantization information of the one or more time domain correlation amplitude values is obtained by quantizing the one or more time domain correlation amplitude values corresponding to the one or more time intervals to be reported.

In some implementations, the terminal may uniformly quantize the one or more time domain correlation amplitude values corresponding to the one or more time intervals to be reported using X bits to obtain the quantization information of the one or more time domain correlation amplitude values corresponding to the one or more time intervals to be reported.

In some other implementations, the terminal may non-uniformly quantize the one or more time domain correlation amplitude values corresponding to the one or more time intervals to be reported using X bits, to obtain quantization information of the one or more time domain correlation amplitude values corresponding to the one or more first time intervals. For example, the one or more time domain correlation amplitude values corresponding to the one or more time intervals to be reported may be exponentially quantized.

In some other implementations, the terminal may perform multi-step quantization on the one or more time domain correlation amplitude values corresponding to the one or more time intervals to be reported to obtain the quantization information of the one or more time domain correlation amplitude values. For example, the one or more time domain correlation amplitude values corresponding to the one or more first time intervals may be quantized in two steps, and a first step uses X bits for quantization and a second step uses Y bits for quantization.

At step S704, the quantization information of the one or more time domain correlation amplitude values is reported to the network device.

Furthermore, the terminal may report the quantization information of the one or more time domain correlation amplitude values corresponding to the one or more first time intervals to the network device.

In an embodiment of the present disclosure, the terminal may determine the time domain correlation amplitude values corresponding to the different time intervals based on the configured TRS resources. In order to reduce uplink feedback overhead, the terminal may report the one or more time domain correlation amplitude values corresponding to the part of the different time intervals to the network device. The network device may determine other information in the TDCP based on the reported one or more time domain correlation amplitude values corresponding to the part of the different time intervals to the network device, thus reducing signaling and resource overhead. Moreover, by means of quantizing the time domain correlation amplitude value to be reported, it is possible to ensure that the network device obtains the TDCP with a certain accuracy without increasing reporting overhead.

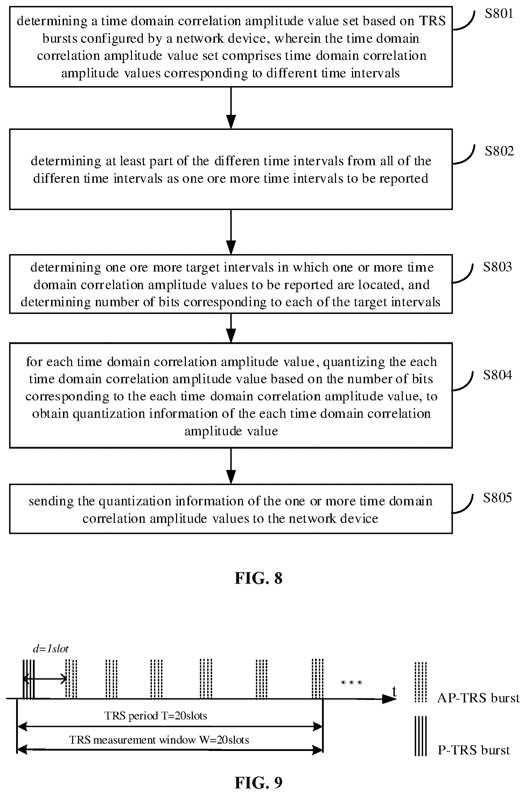

Please refer to FIG.8, FIG. 8 is a flowchart illustrating a method for reporting a TDCP according to an embodiment of the present disclosure. The method for reporting the TDCP may be performed by a terminal. As illustrated in FIG. 8, the method may include, but is not limited to, the following steps.

At step S801, a time domain correlation amplitude value set is determined based on TRS bursts configured by a network device. The time domain correlation amplitude value set includes time domain correlation amplitude values corresponding to different time intervals.

In this embodiment of the present disclosure, an implementation of the step S801 may be implemented by any implementation in respective embodiments of the present disclosure, which is not limited herein and details will not be repeated.

At step S802, at least part of the different time intervals are determined from all of the different time intervals as one or more time intervals to be reported.

In this embodiment of the present disclosure, an implementation of the step S802 may be implemented by any implementation in respective embodiments of the present disclosure, which is not limited herein and details will not be repeated.

At step S803, one or more target intervals in which one or more time domain correlation amplitude values to be reported are located are determined, and number of bits corresponding to each of the target intervals is determined.

At step S804, for each time domain correlation amplitude value to be reported, the each time domain correlation amplitude value is quantized based on the number of bits corresponding to the each time domain correlation amplitude value, to obtain quantization information of the each time domain correlation amplitude value.

In some implementations, the terminal may perform multi-step quantization on the one or more time domain correlation amplitude values to be reported corresponding to the one or more time intervals to obtain the quantization information of the time domain correlation amplitude value. In an example, different intervals may be pre-divided based on a statistical result of the time domain correlation amplitude values. Further, corresponding numbers of bits may be pre-defined or configured for the different intervals.

The terminal may compare each time domain correlation amplitude value to be reported correspond to the time interval with the pre-divided different intervals to determine the target interval in which the each time domain correlation amplitude value to be reported corresponding to the time interval is located, and then the number of bits required to quantize each time domain correlation amplitude value to be reported corresponding to the time interval is determined based on the target interval.

In an example, the one or more time domain correlation amplitude values corresponding to the one or more time intervals to be reported may be quantized in two steps, and a first step uses X bits for quantization and a second step uses Y bits for quantization.

As an example, the terminal may determine the time domain correlation amplitude values corresponding to different time intervals $\tau_i$. A value range of the time domain correlation amplitude values is from 0 to 1. According to a statistical analysis result, value distributions of 0 to 0.5 and 0.5 to 1 are different, and the proportion of the time domain correlation amplitude values in an interval [0,0.5) is higher than the time domain correlation amplitude values in an interval [0.5,1]. It is set that the first step uses X=2bits for quantization and the second step uses Y=3bits for quantization. That is, the time domain correlation amplitude values in the interval [0, 0.5) are quantized using the second step with Y=3bits, and the time domain correlation amplitude values in the interval [0.5,1] are quantized using the first step with Y=2bits.

At step S804, the quantization information of the one or more time domain correlation amplitude values is reported to the network device.

In an embodiment of the present disclosure, the terminal may determine the time domain correlation amplitude values corresponding to the different time intervals based on the configured TRS resources. In order to reduce uplink feedback overhead, the terminal may report the one or more time domain correlation amplitude values corresponding to the part of the different time intervals to the network device. The network device may determine other information in the TDCP based on the reported one or more time domain correlation amplitude values corresponding to the part of the different time intervals to the network device, thus reducing signaling and resource overhead. Moreover, by means of performing two-step quantization on the time domain correlation amplitude values to be reported, it is possible to ensure that the network device obtains the TDCP with a certain accuracy without increasing reporting overhead, and obtain a higher quantization accuracy.

On the basis of the above embodiments, as shown in FIG. 9, the network device configures a TRS period T=20 slots, and a TRS measurement window W=20 slots for obtaining TDCP, and a time interval d=1 slot between two adjacent TRS bursts, in which, the time interval refers to a interval between the first slot in a TRS burst and the first slot in the next adjacent TRS burst. For a TRS burst, the network device configures one CSI-RS resource set including four periods of CSI-RS resources for the terminal (such as UE). These four resources are distributed in two consecutive slots, each slot includes two periods of TRS resources, and the CSI-RS resources in these two slots have the same position in the time domain, and each TRS resource corresponds to one OFDM (orthogonal frequency division multiplexing) symbol. Each periodic TRS burst or each aperiodic TRS burst includes four TRS resources, which are transmitted in two consecutive slots, each slot has two TRS resources, and a time domain position interval between the two TRS resources is 4 OFDM symbols.

As shown in FIG. 9, the network device configures 7 TRS bursts for the UE in one TRS measurement window. The UE may perform channel estimation based on TRS resources corresponding to the 7 TRS bursts, and then determine the TDCP of the UE. In an embodiment of the present disclosure, the UE may report the time domain correlation amplitude values corresponding to the different time intervals to the network device. In one TRS measurement window, the UE may calculate different time intervals based on the 7 TRS bursts. Values of the different time intervals $\tau_i$ may determine according to symbol positions of the periodic TRS resources and the aperiodic TRS resources configured by the network side. For example, the values of $\tau_i$ may be 4 OFDM symbols, 1 slot, 18 OFDM symbols, 2 slots, 3 slots, ..., 6 slots, etc. The UE may estimate channel information based on TRSs received at different symbol positions, and calculate the time domain correlation amplitude values corresponding to the different time intervals $\tau_i$ using the formula (2).

The UE may report all $A(t, \tau_i)$ to the network device after uniformly quantizing them by 3 bits. The network device may estimate a mobility speed or a Doppler spectrum of the UE based on the $A(t, \tau_i)$ reported by the UE, such that a current TDCP of the UE may be obtained. Furthermore, the network device determines which codebook of Type 1 and Type II to be taken as precoding for data transmission based on the TDCP of the UE. Or, the network device configures, according to the TDCP of the UE. An SRS sending period value based on SRS channel reciprocity. Or, the network device performs CSI prediction in a TDD system based on the TDCP of the UE.

In an example, the terminal may report N time domain correlation amplitude values to the network device. A maximum number of the time domain correlation amplitude values that the terminal is allowed to report and is provided in a configuration or an agreement is M=7. The terminal first estimates the estimated channel information of the corresponding position according to respective TRS bursts, and then calculates the time domain correlation amplitude values $A(t, \tau_i)$ corresponding to the different time intervals by using the formula (2). The terminal may obtain its own channel change state or TDCP parameters such as the Doppler spectrum according to the calculated time domain correlation amplitude values $A(t, \tau_i)$. The terminal may determine to report N=4 time domain correlation amplitude values based on a configuration or an indication of the network device or a protocol agreement. For example, the 4 time domain correlation amplitude values to be reported may be predefined by the terminal and the network device as the first N=4 time domain correlation amplitude values in all of the different time intervals $\tau_i$, that is, amplitude values corresponding to $\tau_i$ values of 4 OFDM symbols, 1 slot, 18 OFDM symbols, and 2 slots.

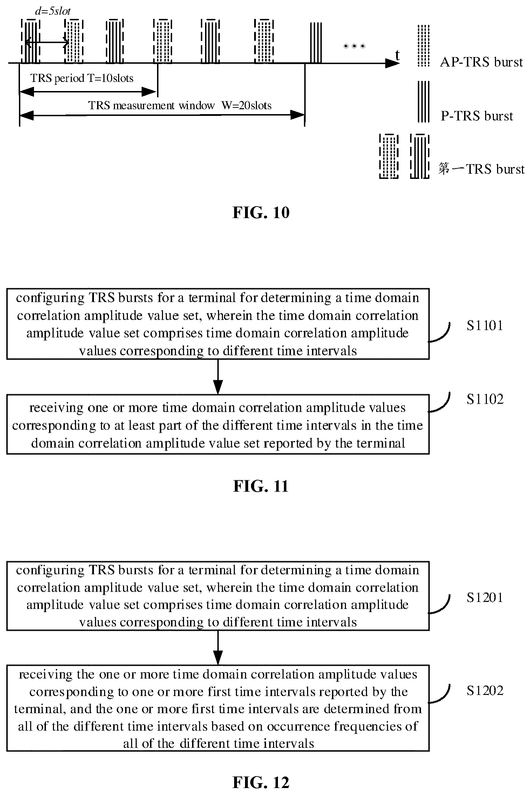

On the basis of the above embodiments, as shown in FIG. 10, the network device configure =10 slots, a TRS measurement window W=20 slots, in which, an interval between two adjacent TRS bursts for reporting TDCP is $d_r$=5 slots. TRS bursts within the same TRS period are uniformly configured. The terminal estimates a channel according to configured TRS resources and calculates time domain correlation amplitude values corresponding to respective TRS bursts. The terminal quantizes different time domain correlation amplitude values corresponding to TRS bursts with a time interval of 5 slots and reported the quantized time domain correlation amplitude values to the network device. The network device determines which codebook of Type 1 and Type II to be taken as precoding for data transmission based on the TDCP of the UE. Or, the network device configures, according to the TDCP of the UE. An SRS sending period value based on SRS channel reciprocity. Or, the network device performs CSI prediction in a TDD system based on the TDCP of the UE.

Please refer to FIG. 11, FIG. 11 is a flowchart illustrating a method for reporting a TDCP according to an embodiment of the present disclosure. The method for reporting the TDCP may be performed by a network device. As illustrated in FIG. 11, the method may include, but is not limited to, the following steps.

At step S1101, TRS bursts are configured for a terminal for determining a time domain correlation amplitude value set, in which, the time domain correlation amplitude value set comprises time domain correlation amplitude values corresponding to different time intervals.

In some implementations, the network device may configure the TRS bursts for the terminal. Number of TRS bursts configured by network device may be determined based on a protocol agreement or a network configuration. For example, M TRS bursts may be configured, where M is an integer greater than or equal to 2. In some implementations, the M TRS bursts include periodic TRS bursts and/or aperiodic TRS bursts, and there is a time interval with at least one time unit between adjacent TRS bursts.

In some implementations, the network device may configure the TRS bursts for the terminal uniformly or non-uniformly. For a process and method of configuring the TRS bursts for the terminal by the network device, reference can be made to the relevant contents in the above embodiments such as the details in step S201, which will not be repeated here.

In an embodiment of the present disclosure, the terminal may receive the TRS bursts configured by the network device, further, perform channel estimation based on the configured TRS bursts, determine a TDCP based on the estimated channel, and report the TDCP to the network device. In some implementations, in order to reduce signaling overhead, the terminal may report channel correlation amplitude values for different time intervals in the TDCP to the network device. In some implementations, the terminal may determine one time domain correlation amplitude value set based on the configured TRS bursts. The time domain correlation amplitude value set includes the time domain correlation amplitude values corresponding to the different time intervals. The terminal may report the one or more time domain correlation amplitude values corresponding to at least part of the different time intervals in the time domain correlation amplitude value set to the network device.

At step S1102, one or more time domain correlation amplitude values corresponding to at least part of the different time intervals in the time domain correlation amplitude value set reported by the terminal are received.

In an example, the network device may receive time domain correlation amplitude values corresponding to all of the different time intervals in the time domain correlation amplitude value set reported by the terminal. In an example, the network device may receive one or more time domain correlation amplitude values corresponding to a part of the different time intervals in the time domain correlation amplitude value set reported by the terminal.

In some implementations, the network device may receive one or more time domain correlation amplitude values corresponding to one or more specified time intervals in the time domain correlation amplitude value set reported by the terminal. For example, the specified time interval may be 4 symbols, or a time interval corresponding to an even index or an odd index.

In some implementations, the part of the different time intervals comprises one or more first time intervals with occurrence frequencies greater than a predetermined frequency or with a high sorting sequence.

In some implementations, all of the different time intervals are sorted in ascending order, and the part of the different time intervals comprises one or more second time intervals comprising a minimum time interval and with a high sorting sequence.

In some implementations, the terminal may determine the part of the different time intervals based on a network indication or a protocol agreement, and report, to the network device, the one or more time domain correlation amplitude values corresponding to the part of the different time intervals. That is, number of the time domain correlation amplitude values corresponding to the part of the different time intervals reported by the terminal may be determined by the terminal and/or reported to the network device. Or, number of the time domain correlation amplitude values corresponding to the part of the different time intervals reported by the terminal may be configured or indicated by the network device, or predefined by negotiation between the terminal and the network device.

After receiving the reported time domain correlation amplitude values corresponding to at least part of the different time intervals, the network device may calculate unreported time domain correlation amplitude values by an interpolation algorithm based on the reported time domain correlation amplitude value.

In an example, after receiving the one or more reported time domain correlation amplitude values corresponding to the at least part of the different time intervals, the network device may determine other information in the TDCP based on the reported one or more time domain correlation amplitude values, such as a difference between a maximum Doppler spread value and a minimum Doppler spread value corresponding to different transmission delays, Doppler spread values corresponding to M strongest peaks in a wideband Doppler spectrum, etc.

Furthermore, the network device determines which codebook of Type 1 and Type II to be taken as precoding for data transmission based on the TDCP of the UE. Or, the network device configures, according to the TDCP of the UE. An SRS (sounding reference signal) sending period value based on SRS channel reciprocity. Or, the network device performs CSI prediction in a TDD system based on the TDCP of the UE.

In an embodiment of the present disclosure, the network device may reasonably configure the TRS resources for the terminal, and then the terminal may accurately determine the TDCP based on the TRS resources configured by the network device. After determining the TDPC, the terminal may report the one or more time domain correlation amplitude values corresponding to the part of the different time intervals to the network device. The network device may determine other information in the TDCP based on the reported one or more time domain correlation amplitude values corresponding to the part of the different time intervals, thus reducing signaling and resource overhead.

Please refer to FIG. 12, FIG. 12 is a flowchart illustrating a method for reporting a TDCP according to an embodiment of the present disclosure. The method for reporting the TDCP may be performed by a network device. As illustrated in FIG. 12, the method may include, but is not limited to, the following steps.

At step S1201, TRS bursts are configured for a terminal for determining a time domain correlation amplitude value set, in which, the time domain correlation amplitude value set comprises time domain correlation amplitude values corresponding to different time intervals.

In this embodiment of the present disclosure, an implementation of the step S1201 may be implemented by any implementation in respective embodiments of the present disclosure, which is not limited herein and details will not be repeated.

At step S1202, the one or more time domain correlation amplitude values corresponding to one or more first time intervals reported by the terminal are received, and the one or more first time intervals are determined from all of the different time intervals based on occurrence frequencies of all of the different time intervals.

In an embodiment of the present disclosure, the time interval set corresponding to each symbol position may be obtained, and each time interval set includes different time intervals corresponding to the symbol position. It is understandable that different symbol positions may correspond to the same time interval. In an example, the occurrence frequencies of time intervals in time interval sets corresponding to all symbol positions may be counted to obtain the occurrence frequency of each time interval. The terminal may determine the part of the different time intervals to be reported based on the occurrence frequencies of the time intervals.

In some implementations, the occurrence frequencies may be sorted in descending order, and the one or more time intervals with a high sorting sequence may be selected. In an embodiment of the present disclosure, the selected one or more time intervals with a high sorting sequence is called as the first time interval, and the network device may receive the one or more time domain correlation amplitude values corresponding to the one or more first time interval reported by the terminal.

In another implementation, a predetermined frequency may be pre-configured or provided by a protocol agreement, the occurrence frequencies of the time intervals may be compared with the predetermined frequency, and one or more time interval with the occurrence frequencies greater than the predetermined frequency are selected. In an embodiment of the present disclosure, the one or more time interval with the occurrence frequencies greater than the predetermined frequency is referred to as the first time interval, and the network device may receive the one or more time domain correlation amplitude values corresponding to the one or more first time interval reported by the terminal.

In an example, number of first time intervals may be provided by a network configuration or a protocol agreement, or may be determined by the terminal and reported to the network device. In other words, the network device may receive the number of the first time intervals reported by the terminal.

In some implementations, the terminal may non-uniformly quantize the one or more time domain correlation amplitude values corresponding to the one or more first time intervals using X bits to obtain quantization information of the one or more time domain correlation amplitude values corresponding to the one or more first time intervals.

In some other implementations, the terminal may perform multi-step quantization on the one or more time domain correlation amplitude values corresponding to the one or more first time intervals to obtain the quantization information of the one or more time domain correlation amplitude values corresponding to the one or more first time intervals. For example, the one or more time domain correlation amplitude values corresponding to the one or more first time intervals may be quantized in two steps, and a first step uses X bits for quantization and a second step uses Y bits for quantization.

The network device may receive quantization information of the one or more time domain correlation amplitude values corresponding to the one or more first time intervals. Further, the network device may determine the one or more time domain correlation amplitude values based on the quantization information.

In an embodiment of the present disclosure, the network device may reasonably configure the TRS resources for the terminal, and then the terminal may accurately determine the TDCP based on the TRS resources configured by the network device. After determining the TDPC, the terminal may report the one or more time domain correlation amplitude values corresponding to the part of the different time intervals to the network device. The network device may determine other information in the TDCP based on the reported one or more time domain correlation amplitude values corresponding to the part of the different time intervals, thus reducing signaling and resource overhead. Moreover, by means of quantizing the time domain correlation amplitude value to be reported, it is possible to ensure that the network device obtains the TDCP with a certain accuracy without increasing reporting overhead.

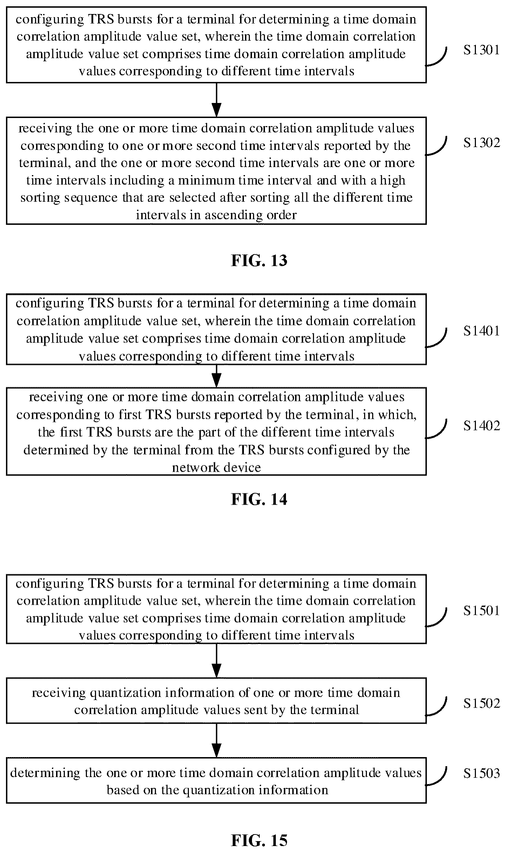

Please refer to FIG. 13, FIG. 13 is a flowchart illustrating a method for reporting a TDCP according to an embodiment of the present disclosure. The method for reporting the TDCP may be performed by a network device. As illustrated in FIG. 13, the method may include, but is not limited to, the following steps.

At step S1301, TRS bursts are configured for a terminal for determining a time domain correlation amplitude value set, in which, the time domain correlation amplitude value set comprises time domain correlation amplitude values corresponding to different time intervals.

In this embodiment of the present disclosure, an implementation of the step S1301 may be implemented by any implementation in respective embodiments of the present disclosure, which is not limited herein and details will not be repeated.

At step S 1302, the one or more time domain correlation amplitude values corresponding to one or more second time intervals reported by the terminal are received, and the one or more second time intervals are one or more time intervals including a minimum time interval and with a high sorting sequence that are selected after sorting all the different time intervals in ascending order.

In an embodiment of the present disclosure, the time interval set corresponding to each symbol position may be obtained, and each time interval set includes different time intervals corresponding to the symbol position. All of the different time intervals may be obtained cased on the time interval set corresponding to each symbol position. Further, the terminal may sort all of the different time intervals in ascending order. In an embodiment of the present disclosure, the terminal may report the one or more second time intervals comprising a minimum time interval and with a high sorting sequence, referred to as the second time interval, and the network device may receive the one or more time domain correlation amplitude values corresponding to the one or more second time interval reported by the terminal.

In an example, number of second time intervals may be provided by a network configuration or a protocol agreement, or may be determined by the terminal and reported to the network device. In other words, the network device may receive the number of the second time intervals reported by the terminal.

In some implementations, the terminal may uniformly or non-uniformly quantize the one or more time domain correlation amplitude values corresponding to the one or more second time intervals using X bits to obtain quantization information of the one or more time domain correlation amplitude values corresponding to the one or more second time intervals.

In some other implementations, the terminal may perform multi-step quantization on the one or more time domain correlation amplitude values corresponding to the one or more second time intervals to obtain the quantization information of the one or more time domain correlation amplitude values corresponding to the one or more second time intervals.

The network device may receive quantization information of the one or more time domain correlation amplitude values corresponding to the one or more second time intervals. Further, the network device may determine the one or more time domain correlation amplitude values based on the quantization information.

In an embodiment of the present disclosure, the network device may reasonably configure the TRS resources for the terminal, and then the terminal may accurately determine the TDCP based on the TRS resources configured by the network device. After determining the TDPC, the terminal may report the one or more time domain correlation amplitude values corresponding to the part of the different time intervals to the network device. The network device may determine other information in the TDCP based on the reported one or more time domain correlation amplitude values corresponding to the part of the different time intervals, thus reducing signaling and resource overhead. Moreover, by means of quantizing the time domain correlation amplitude value to be reported, it is possible to ensure that the network device obtains the TDCP with a certain accuracy without increasing reporting overhead.

Please refer to FIG. 14, FIG. 14 is a flowchart illustrating a method for reporting a TDCP according to an embodiment of the present disclosure. The method for reporting the TDCP may be performed by a network device. As illustrated in FIG. 14, the method may include, but is not limited to, the following steps.

At step S1401, TRS bursts are configured for a terminal for determining a time domain correlation amplitude value set, in which, the time domain correlation amplitude value set comprises time domain correlation amplitude values corresponding to different time intervals.

In this embodiment of the present disclosure, an implementation of the step S1301 may be implemented by any implementation in respective embodiments of the present disclosure, which is not limited herein and details will not be repeated.

At step S1402, one or more time domain correlation amplitude values corresponding to first TRS bursts reported by the terminal are received, in which, the first TRS bursts are the part of the different time intervals determined by the terminal from the TRS bursts configured by the network device.

In an example, the network device may uniformly configure M TRS bursts for the terminal, that is, time intervals between adjacent TRS bursts are the same. It should be noted that in this embodiment of the present disclosure, time intervals between TRS bursts are referred to as burst intervals.

In some implementations, the terminal may uniformly determine the first TRS bursts from the M TRS bursts configured by the network device. In an example, the terminal may uniformly determine N first TRS bursts from the M TRS bursts according to the same burst interval, as shown in FIG. 6a. The specific implementation method may be implemented by any of the embodiments of the present disclosure, which is not limited here and details will not be repeated.

In some other implementations, the terminal may non-uniformly determine the first TRS bursts from the M TRS bursts configured by the network device. In an example, the terminal may non-uniformly determine N first TRS bursts from the M TRS bursts according to different burst intervals. The specific implementation method may be implemented by any of the embodiments of the present disclosure, which is not limited here and details will not be repeated.

In some other implementations, the terminal may group the TRS bursts configured by the network device, and determine the first TRS burst in the group from the TRS bursts in the same group, and the burst intervals between adjacent first TRS bursts in at least two groups in different groups are different. That is, the terminal may group M TRS bursts, and may select one or more TRS bursts in different groups as the first TRS burst, and the burst intervals between the first TRS bursts in respective groups are different, as shown in FIG. 6b. The specific implementation method may be implemented by any of the embodiments of the present disclosure, which is not limited here and details will not be repeated.

In some implementations, after determining the first TRS bursts, the network device may receive the time domain correlation amplitude values for the different time intervals corresponding to the first TRS bursts to the network device reported by the terminal.

In an embodiment of the present disclosure, the network device may reasonably configure the TRS resources for the terminal, and then the terminal may accurately determine the TDCP based on the TRS resources configured by the network device. After determining the TDPC, the terminal may report the one or more time domain correlation amplitude values corresponding to the part of the different time intervals to the network device. The network device may determine other information in the TDCP based on the reported one or more time domain correlation amplitude values corresponding to the part of the different time intervals, thus reducing signaling and resource overhead.

Please refer to FIG. 15, FIG. 15 is a flowchart illustrating a method for reporting a TDCP according to an embodiment of the present disclosure. The method for reporting the TDCP may be performed by a network device. As illustrated in FIG. 15, the method may include, but is not limited to, the following steps.

At step S1501, TRS bursts are configured for a terminal for determining a time domain correlation amplitude value set, in which, the time domain correlation amplitude value set comprises time domain correlation amplitude values corresponding to different time intervals.

In this embodiment of the present disclosure, an implementation of the step S1501 may be implemented by any implementation in respective embodiments of the present disclosure, which is not limited herein and details will not be repeated.

At step S1502, quantization information of one or more time domain correlation amplitude values sent by the terminal is received.

In some implementations, the network device may receive the quantization information of the one or more time domain correlation amplitude values after being uniformly quantized using X bits sent by the terminal.

In some implementations, the network device may receive the quantization information of the one or more time domain correlation amplitude values after being non-uniformly quantized using X bits sent by the terminal.

In some other implementations, the network device may receive the quantization information of the one or more time domain correlation amplitude values after multi-step quantization sent by the terminal. For example, the one or more time domain correlation amplitude values corresponding to the part of the different time intervals may be quantized in two steps, and the first step uses X bits for quantization and the second step uses Y bits for quantization. Number of bits used in the quantizing the time domain correlation amplitude values may be determined based on one or more target intervals in which one or more time domain correlation amplitude values are located, and different target intervals correspond to different numbers of bits for quantization. In an example, the number of bits for quantization corresponding to different target intervals may also be the same.

At step S1503, the one or more time domain correlation amplitude values are determined based on the quantization information.

The network device may determine the one or more time domain correlation amplitude values reported by the terminal based on the quantization information, for example in a case of multi-step quantization.

In an embodiment of the present disclosure, the network device may reasonably configure the TRS resources for the terminal, and then the terminal may accurately determine the TDCP based on the TRS resources configured by the network device. After determining the TDPC, the terminal may report the one or more time domain correlation amplitude values corresponding to the part of the different time intervals to the network device. The network device may determine other information in the TDCP based on the reported one or more time domain correlation amplitude values corresponding to the part of the different time intervals, thus reducing signaling and resource overhead. Moreover, by means of quantizing the time domain correlation amplitude value to be reported, it is possible to ensure that the network device obtains the TDCP with a certain accuracy without increasing reporting overhead.

In the above embodiments of the disclosure, the methods according to the embodiments of the disclosure are described from the perspectives of the network device and the terminal, respectively. In order to realize each of functions in the methods according to the above embodiments of the disclosure, the network device and the first terminal may include a hardware structure, a software module, and realize each of the above functions in the form of a hardware structure, a software module, or a combination of a hardware structure and a software module. A certain function of the above functions may be performed in the form of a hardware structure, a software module, or a combination of a hardware structure and a software module.

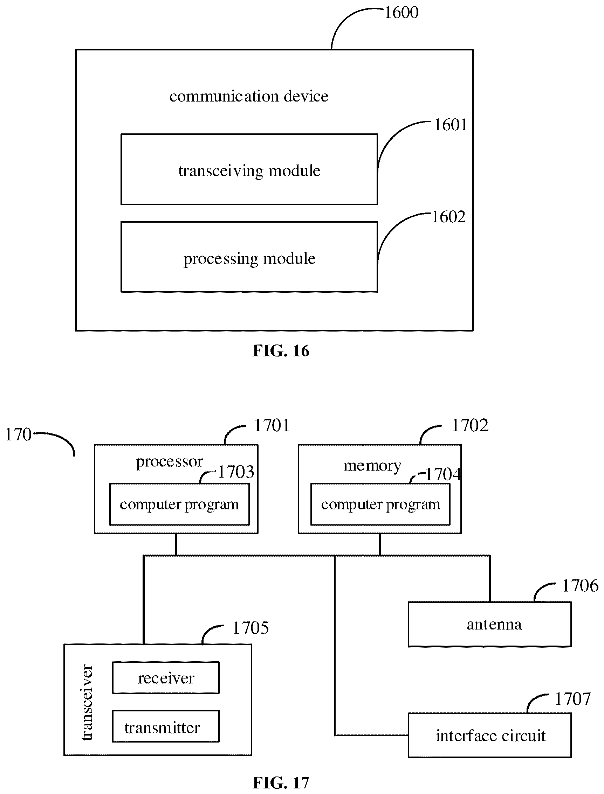

As illustrated in FIG. 16, FIG. 16 is a schematic diagram illustrating a communication device 1600 according to an embodiment of the disclosure. The communication device 1600 illustrated in FIG. 16 may include a transceiver module 1601 and a processing module 1602. The transceiver module 1601 may include a transmitting module and/or a receiving module. The transmitting module is configured to perform a transmitting function, and the receiving module is configured to perform a receiving function, and the transceiver module 1601 may perform the transmitting function and/or the receiving function.

The communication device 1600 may be a network device, an apparatus in the network side device, or an apparatus that can be used together with the network device. Or, the communication device 1600 may be a terminal, an apparatus in the terminal, or an apparatus that can be used together with the terminal.

The communication device 1600 is a terminal.

The processing module 1602 is configured to determine a time domain correlation amplitude value set based on TRS bursts configured by a network device, in which, the time domain correlation amplitude value set includes time domain correlation amplitude values corresponding to different time intervals.

The transceiver module 1601 is configured to report, to the network device, one or more time domain correlation amplitude values corresponding to at least part of the different time intervals in the time domain correlation amplitude value set.

In some implementations, the transceiver module 1601 is further configured to receive the TRS bursts configured by the network device and determining each of symbol positions comprising TRS resources in the TRS bursts.

The processing module 1602 is further configured to determine time interval sets corresponding to the symbol positions respectively, wherein each time interval set comprises a plurality of different time intervals; perform channel estimations based on the TRS resources corresponding to the symbol positions respectively to obtain estimated channel information corresponding to the symbol positions respectively; and determine the time domain correlation amplitude value set based on the estimated channel information and the time interval sets corresponding to the symbol positions respectively.

In some implementations, the processing module 1602 is further configured to determine candidate time domain correlation amplitude values for each time interval corresponding to each symbol position based on the estimated channel information corresponding to the each symbol position and each time interval in the time interval set corresponding to the each symbol position; obtain a time domain correlation amplitude value corresponding to the each time interval based on the candidate time domain correlation amplitude values corresponding to the each time interval.

In some implementations, the transceiver module 1601 is further configured to report, to the network device, time domain correlation amplitude values corresponding to all of the different time intervals in the time domain correlation amplitude value set.

In some implementations, the transceiver module 1601 is further configured to report, to the network device, one or more time domain correlation amplitude values corresponding to a part of the different time intervals in the time domain correlation amplitude value set.

In some implementations, the processing module 1602 is further configured to determine the part of the different time intervals based on a network indication or a protocol agreement, and the transceiver module 1601 is further configured to report, to the network device, the one or more time domain correlation amplitude values corresponding to the part of the different time intervals.

In some implementations, the processing module 1602 is further configured to count occurrence frequencies of the different time intervals and sort the occurrence frequencies; and select, based on a sorting result, one or more first time intervals with occurrence frequencies greater than a predetermined frequency or with a high sorting sequence as the part of the different time intervals, and the transceiver module 1601 is further configured to report, to the network device, the one or more time domain correlation amplitude values corresponding to the one or more first time intervals.

In some implementations, the processing module 1602 is further configured to sort all the different time intervals in ascending order, and determine one or more second time intervals comprising a minimum time interval and with a high sorting sequence as the part of the different time intervals, and the transceiver module 1601 is further configured to report, to the network device, the one or more time domain correlation amplitude values corresponding to the second time intervals.

In some implementations, the transceiver module 1601 is further configured to report number of first time intervals and/or number of second time intervals to the network device.

In some implementations, number of first time intervals and/or number of second time intervals are provided based on a network configuration or a protocol agreement.

In some implementations, the processing module 1602 is further configured to determine a part of the TRS bursts from the TRS bursts configured by the network device as first TRS bursts; and the transceiver module 1601 is further configured to report, to the network device, the time domain correlation amplitude values for different time intervals corresponding to the first TRS bursts.

In some implementations, the processing module 1602 is further configured to determine the first TRS bursts uniformly according to the same burst interval from the TRS bursts configured by the network device.

In some implementations, the processing module 1602 is further configured to determine the first TRS bursts non-uniformly according to different burst intervals from the TRS bursts configured by the network device.

In some implementations, the processing module 1602 is further configured to group the TRS bursts configured by the network device, and determine a burst interval corresponding to each group, in which, burst intervals corresponding to at least two groups in different groups are different; and determine the first TRS bursts from TRS bursts in the different groups according to burst intervals corresponding the different groups respectively.

In some implementations, the transceiver module 1601 is further configured to report, to the network device, the one or more time domain correlation amplitude values corresponding to one or more specified time intervals in the time domain correlation amplitude value set; or report, to the network device, the one or more time domain correlation amplitude values corresponding to one or more specified time intervals in different time interval sets corresponding to the time domain correlation amplitude value set, in which, each symbol position comprising TRS resources in the TRS bursts corresponds to one time interval set.

In some implementations, the processing module 1602 is further configured to quantize the one or more time domain correlation amplitude values corresponding to the at least part of the different time intervals to obtain quantization information of the one or more time domain correlation amplitude values; and the transceiver module 1601 is further configured to send the quantization information of the one or more time domain correlation amplitude values to the network device.

In some implementations, the processing module 1602 is further configured to determine one or more target intervals in which one or more time domain correlation amplitude values to be reported are located, and determine number of bits corresponding to each of the target intervals; and for each time domain correlation amplitude value, quantize the each time domain correlation amplitude value based on the number of bits corresponding to the each time domain correlation amplitude value, to obtain quantization information of the each time domain correlation amplitude value.

The communication device 1600 is a network device.

The processing module 1602 is further configured to configure TRS bursts for a terminal for determining a time domain correlation amplitude value set, wherein the time domain correlation amplitude value set comprises time domain correlation amplitude values corresponding to different time intervals.

The transceiver module 1601 is further configured to receive one or more time domain correlation amplitude values corresponding to at least part of the different time intervals in the time domain correlation amplitude value set reported by the terminal.

In some implementations, the processing module 1602 is further configured to determine other time domain channel properties of the terminal based on the reported time domain correlation amplitude values.

In some implementations, the transceiver module 1601is further configured to receive time domain correlation amplitude values corresponding to all of the different time intervals in the time domain correlation amplitude value set reported by the terminal.

In some implementations, the transceiver module 1601 is further configured to receive one or more time domain correlation amplitude values corresponding to a part of the different time intervals in the time domain correlation amplitude value set reported by the terminal.

In some implementations, the part of the different time intervals are provided based on a network indication or a protocol agreement.

In some implementations, the part of the different time intervals comprises one or more first time intervals with occurrence frequencies greater than a predetermined frequency or with a high sorting sequence.

In some implementations, all of the different time intervals are sorted in ascending order, and the part of the different time intervals comprises one or more second time intervals comprising a minimum time interval and with a high sorting sequence.

In some implementations, the transceiver module 1601is further configured to receive number of first time intervals and/or number of second time intervals reported by the terminal.

In some implementations, number of first time intervals and/or number of second time intervals are determined based on a protocol agreement.

In some implementations, the transceiver module 1601 is further configured to receive one or more time domain correlation amplitude values corresponding to first TRS bursts reported by the terminal, in which, the first TRS bursts are the part of the different time intervals determined by the terminal from the TRS bursts configured by the network device.

In some implementations, the first TRS bursts are TRS bursts uniformly determined according to the same burst interval from the TRS bursts configured by the network device.

In some implementations, the first TRS bursts are TRS bursts determined from TRS bursts in different groups according to burst intervals corresponding to the different groups respectively, wherein burst intervals corresponding to at least two groups in different groups are different.

In some implementations, the transceiver module 1601 is further configured to receive the one or more time domain correlation amplitude values corresponding to one or more specified time intervals in the time domain correlation amplitude value set reported by the terminal; or receive the one or more time domain correlation amplitude values corresponding to one or more specified time intervals in different time interval sets corresponding to the time domain correlation amplitude value set reported by the terminal, wherein each symbol position comprising TRS resources in the TRS bursts corresponds to one time interval set.

In some implementations, the transceiver module 1601 is further configured to receive quantization information of one or more time domain correlation amplitude values sent by the terminal, and determine the one or more time domain correlation amplitude values based on the quantization information.

In an embodiment of the present disclosure, the terminal may determine the time domain correlation amplitude values corresponding to the different time intervals based on the configured TRS resources. In order to reduce uplink feedback overhead, the terminal may report the one or more time domain correlation amplitude values corresponding to the part of the different time intervals to the network device. The network device may determine other information in the TDCP based on the reported one or more time domain correlation amplitude values corresponding to the part of the different time intervals to the network device, thus reducing signaling and resource overhead. Moreover, by means of quantizing the time domain correlation amplitude value to be reported, it is possible to ensure that the network device obtains the TDCP with a certain accuracy without increasing reporting overhead.

As illustrated in FIG. 17, FIG. 17 is a schematic diagram of another communication device 1700 provided by an embodiment of the disclosure. The communication device 1700 may be a network device, a terminal (such as a first terminal in the foregoing method embodiments), or a chip, a chip system, or a processor that supports the network device to implement the above method, or may be a chip, a chip system, or a processor that supports the terminal to implement the above method. The apparatus may be used to implement the method as described in the above method embodiments. For details, please refer to the description in the above method embodiments.

The communication device 1700 may include one or more processors 1701. The processor 1701 may be a general purpose processor or a dedicated processor, such as, a baseband processor or a central processor. The baseband processor is used for processing communication protocols and communication data. The central processor is used for controlling the communication device (e.g., base station, baseband chip, terminal, terminal chip, DU, or CU), executing computer programs, and processing data of the computer programs.

In an example, the communication device 1700 may include one or more memories 1702 on which a computer program 1703 may be stored. The processor 1701 executes the computer program 1703 to cause the communication device 1700 to perform the method described in the above method embodiments. In an example, data may also be stored in the memory 1702. The communication device 1700 and the memory 1702 may be set separately or integrated together.

In an example, the communication device 1700 may also include a transceiver 1704 and an antenna 1705. The transceiver 1704 may be referred to as a transceiver unit, a transceiver element, or a transceiver circuit, for implementing the transceiver function. The transceiver 1704 may include a receiver and a transmitter. The receiver may be referred to as a receiver element or a receiving circuit, for implementing the receiving function. The transmitter may be referred to as a transmitter element or a transmitting circuit, for implementing the transmitting function.

In an example, the communication device 1700 may also include one or more interface circuits 1706. The interface circuits 1706 are used to receive code instructions and transmit them to the processor 1701. The processor 1701 runs the code instructions to cause the communication device 1700 to perform the method described in the method embodiments.

In an implementation, the processor 1701 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 1701 may store a computer program 1703. When the processor 1701 executes the computer program 1703, the communication device 1700 is caused to perform the method as described in the above method embodiments. The above computer program may be solidified in the processor 1701, in such case, the processor 1701 may be implemented by hardware.

In an implementation, the communication device 1700 may include circuits. The circuits may implement the sending, receiving or communicating function in the preceding method embodiments. The processor and transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a network device or a terminal (such as a first terminal in the foregoing method embodiments), but the scope of the communication device described in the disclosure is not limited thereto, and the structure of the communication device may not be limited by FIG. 17. The communication device may be a stand-alone device or may be part of a larger device. For example, the described communication device may be:

(1) a stand-alone IC, chip, chip system or subsystem;
(2) a set of ICs including one or more ICs, optionally, the set of ICs may also include storage components for storing data and computer programs;
(3) an ASIC, such as a modem;
(4) a module that may be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

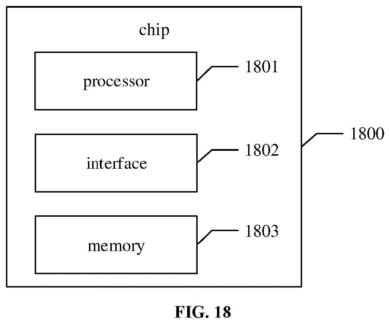

For a case where the communication device may be a chip or a chip system, please refer to the schematic diagram of a chip shown in FIG. 18. In FIG. 18, the chip includes a processor 1801 and an interface 1802. There may be one or more processors 1801, and there may be multiple interfaces 1802.

In some implementations, the chip can be used to implement the functions of the terminal in the embodiments of the present disclosure. For detailed introduction, reference can be made to details of the relevant contents in the above embodiments, which will not be repeated here.

In some implementations, the chip can be used to implement the functions of the network device in the embodiments of the present disclosure. For detailed introduction, reference can be made to details of the relevant contents in the above embodiments, which will not be repeated here.

In an example, the chip further includes a memory 1803 used for storing necessary computer programs and data.

In an embodiment of the present disclosure, the high-dimensional 8-antenna port multi-antenna panel codeword may be constructed based on the first beam of the first transmission layer and the codebook coefficients, which may satisfy that uplink MIMO supports 1-layer to 4-layer transmission requirements of the 8-antenna port multi-antenna panel and further enhance the uplink MIMO technology.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

An embodiment of the disclosure also provides a TRS configuration system. The system includes a communication device as a network device in the aforementioned embodiment of FIG. 15 and a communication device as a terminal, or the system includes a communication device as a network side device in the aforementioned embodiment of FIG. 16 and a communication device as a terminal.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer programs on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that can be understood by the communication device, and the values or representations of the parameters may be other values or representations that can be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, pre-define, store, pre-store, pre-negotiate, pre-configure, solidify, or pre-fire. Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, for the specific working processes of the systems, apparatuses, and units described above reference may be made to the corresponding processes in the preceding method embodiments, and details will not be repeated herein.

The above implementations are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the stated claims.

**Claims**

1. A method for reporting a time domain channel property (TDCP), performed by a terminal, comprising:

    determining a time domain correlation amplitude value set based on tracking reference signal (TRS) bursts configured by a network device, wherein the time domain correlation amplitude value set comprises time domain correlation amplitude values corresponding to different time intervals; and
    reporting, to the network device, one or more time domain correlation amplitude values corresponding to at least part of the different time intervals in the time domain correlation amplitude value set.

2. The method according to claim 1, wherein determining the time domain correlation amplitude value set based on the TRS bursts configured by the network device comprises:

    receiving the TRS bursts configured by the network device and determining each of symbol positions comprising TRS resources in the TRS bursts;
    determining time interval sets corresponding to the symbol positions respectively, wherein each time interval set comprises a plurality of different time intervals;
    performing channel estimations based on the TRS resources corresponding to the symbol positions respectively to obtain estimated channel information corresponding to the symbol positions respectively; and

determining the time domain correlation amplitude value set based on the estimated channel information and the time interval sets corresponding to the symbol positions respectively.

3. The method according to claim 2, wherein determining the time domain correlation amplitude value set based on the estimated channel information and the time interval sets corresponding to the symbol positions respectively comprises:

determining candidate time domain correlation amplitude values for each time interval corresponding to each symbol position based on the estimated channel information corresponding to the each symbol position and each time interval in the time interval set corresponding to the each symbol position; and
obtaining a time domain correlation amplitude value corresponding to the each time interval based on the candidate time domain correlation amplitude values corresponding to the each time interval.

4. The method according to any one of claims 1 to 3, wherein reporting, to the network device, the one or more time domain correlation amplitude values corresponding to the at least part of the different time intervals in the time domain correlation amplitude value set comprises:
reporting, to the network device, time domain correlation amplitude values corresponding to all of the different time intervals in the time domain correlation amplitude value set.

5. The method according to any one of claims 1 to 3, wherein reporting, to the network device, the one or more time domain correlation amplitude values corresponding to at least part of the different time intervals in the time domain correlation amplitude value set comprises:
reporting, to the network device, one or more time domain correlation amplitude values corresponding to a part of the different time intervals in the time domain correlation amplitude value set.

6. The method according to claim 5, wherein reporting, to the network device, the one or more time domain correlation amplitude values corresponding to the part of the different time intervals in the time domain correlation amplitude value set comprises:
determining the part of the different time intervals based on a network indication or a protocol agreement, and reporting, to the network device, the one or more time domain correlation amplitude values corresponding to the part of the different time intervals.

7. The method according to claim 5, wherein reporting, to the network device, the one or more time domain correlation amplitude values corresponding to the part of the different time intervals in the time domain correlation amplitude value set comprises:

counting occurrence frequencies of the different time intervals and sorting the occurrence frequencies; and selecting, based on a sorting result, one or more first time intervals with occurrence frequencies greater than a predetermined frequency or with a high sorting sequence as the part of the different time intervals, and reporting, to the network device, the one or more time domain correlation amplitude values corresponding to the one or more first time intervals.

8. The method according to claim 5, wherein reporting, to the network device, the one or more time domain correlation amplitude values corresponding to the part of the different time intervals in the time domain correlation amplitude value set comprises:
sorting all the different time intervals in ascending order, and determining one or more second time intervals comprising a minimum time interval and with a high sorting sequence as the part of the different time intervals, and reporting, to the network device, the one or more time domain correlation amplitude values corresponding to the second time intervals.

9. The method according to claim 7 or 8, further comprising:

reporting number of first time intervals and/or number of second time intervals to the network device; or providing number of first time intervals and/or number of second time intervals based on a network configuration or a protocol agreement.

10. The method according to claim 5, wherein reporting, to the network device, the one or more time domain correlation amplitude values corresponding to the part of the different time intervals in the time domain correlation amplitude value set comprises:

determining a part of the TRS bursts from the TRS bursts configured by the network device as first TRS bursts; and

reporting, to the network device, the time domain correlation amplitude values for different time intervals corresponding to the first TRS bursts.

11. The method according to claim 10, wherein determining the part of the TRS bursts from the TRS bursts configured by the network device as the first TRS bursts comprises:
determining the first TRS bursts uniformly according to the same burst interval from the TRS bursts configured by the network device.

12. The method according to claim 11, wherein determining the part of TRS bursts from the TRS bursts configured by the network device as the first TRS bursts comprises:
determining the first TRS bursts non-uniformly according to different burst intervals from the TRS bursts configured by the network device.

13. The method according to claim 12, wherein determining the first TRS bursts non-uniformly according to the different burst intervals from the TRS bursts configured by the network device comprises:

grouping the TRS bursts configured by the network device, and determining a burst interval corresponding to each group, wherein burst intervals corresponding to at least two groups in different groups are different; and determining the first TRS bursts from TRS bursts in the different groups according to burst intervals corresponding the different groups respectively.

14. The method according to claim 5, wherein reporting, to the network device, the one or more time domain correlation amplitude values corresponding to the part of the different time intervals in the time domain correlation amplitude value set comprises:

reporting, to the network device, the one or more time domain correlation amplitude values corresponding to one or more specified time intervals in the time domain correlation amplitude value set; or reporting, to the network device, the one or more time domain correlation amplitude values corresponding to one or more specified time intervals in different time interval sets corresponding to the time domain correlation amplitude value set, wherein each symbol position comprising TRS resources in the TRS bursts corresponds to one time interval set.

15. The method according to any one of claims 1 to 3, wherein reporting, to the network device, the one or more time domain correlation amplitude values corresponding to the at least part of the different time intervals in the time domain correlation amplitude value set comprises:

quantizing the one or more time domain correlation amplitude values corresponding to the at least part of the different time intervals to obtain quantization information of the one or more time domain correlation amplitude values; and sending the quantization information of the one or more time domain correlation amplitude values to the network device.

16. The method according to claim 15, wherein quantizing the one or more time domain correlation amplitude values corresponding to the at least part of the different time intervals to obtain the quantization information of the one or more time domain correlation amplitude values comprises:

determining one or more target intervals in which one or more time domain correlation amplitude values to be reported are located, and determining number of bits corresponding to each of the target intervals; and for each time domain correlation amplitude value, quantizing the each time domain correlation amplitude value based on the number of bits corresponding to the each time domain correlation amplitude value, to obtain quantization information of the each time domain correlation amplitude value.

17. A method for reporting a time domain channel property (TDCP), performed by a network device, comprising:

configuring TRS bursts for a terminal for determining a time domain correlation amplitude value set, wherein the time domain correlation amplitude value set comprises time domain correlation amplitude values corresponding to different time intervals; and
receiving one or more time domain correlation amplitude values corresponding to at least part of the different time intervals in the time domain correlation amplitude value set reported by the terminal.

18. The method according to claim 17, wherein, after receiving the one or more time domain correlation amplitude values corresponding to the at least part of the different time intervals in the time domain correlation amplitude value set reported by the terminal, the method further comprises:
determining other time domain channel properties of the terminal based on the reported time domain correlation amplitude values.

19. The method according to claim 17, wherein receiving the one or more time domain correlation amplitude values corresponding to the at least part of the different time intervals in the time domain correlation amplitude value set reported by the terminal comprises:
receiving time domain correlation amplitude values corresponding to all of the different time intervals in the time domain correlation amplitude value set reported by the terminal.

20. The method according to claim 17, wherein receiving one or more time domain correlation amplitude values corresponding to the at least part of the different time intervals in the time domain correlation amplitude value set reported by the terminal comprises:
receiving one or more time domain correlation amplitude values corresponding to a part of the different time intervals in the time domain correlation amplitude value set reported by the terminal.

21. The method according to claim 20, wherein the part of the different time intervals are provided based on a network indication or a protocol agreement.

22. The method according to claim 20, wherein the part of the different time intervals comprises one or more first time intervals with occurrence frequencies greater than a predetermined frequency or with a high sorting sequence.

23. The method according to claim 21, wherein all of the different time intervals are sorted in ascending order, and the part of the different time intervals comprises one or more second time intervals comprising a minimum time interval and with a high sorting sequence.

24. The method according to claim 22 or 23, further comprising:

receiving number of first time intervals and/or number of second time intervals reported by the terminal; or
determining number of first time intervals and/or number of second time intervals based on a protocol agreement.

25. The method according to claim 20, wherein receiving the one or more time domain correlation amplitude values corresponding to the part of the different time intervals in the time domain correlation amplitude value set reported by the terminal comprises:
receiving one or more time domain correlation amplitude values corresponding to first TRS bursts reported by the terminal, wherein the first TRS bursts are the part of the different time intervals determined by the terminal from the TRS bursts configured by the network device.

26. The method according to claim 25, wherein the first TRS bursts are TRS bursts uniformly determined according to the same burst interval from the TRS bursts configured by the network device.

27. The method according to claim 25, wherein the first TRS bursts are TRS bursts determined from TRS bursts in different groups according to burst intervals corresponding to the different groups respectively, wherein burst intervals corresponding to at least two groups in different groups are different.

28. The method according to claim 20, wherein receiving the one or more time domain correlation amplitude values corresponding to the part of the different time intervals in the time domain correlation amplitude value set reported by the terminal comprises:

receiving the one or more time domain correlation amplitude values corresponding to one or more specified time intervals in the time domain correlation amplitude value set reported by the terminal; or

receiving the one or more time domain correlation amplitude values corresponding to one or more specified time intervals in different time interval sets corresponding to the time domain correlation amplitude value set reported by the terminal, wherein each symbol position comprising TRS resources in the TRS bursts corresponds to one time interval set.

29. The method according to any one of claims 17 to 23, receiving the one or more time domain correlation amplitude values corresponding to the at least part of the different time intervals in the time domain correlation amplitude value set reported by the terminal comprises:

receiving quantization information of one or more time domain correlation amplitude values sent by the terminal; and

determining the one or more time domain correlation amplitude values based on the quantization information.

30. A communication device, comprising:

a processing module, configured to determine a time domain correlation amplitude value set based on tracking reference signal (TRS) bursts configured by a network device, wherein the time domain correlation amplitude value set comprises time domain correlation amplitude values corresponding to different time intervals; and
a transceiver module, configured to report, to the network device, one or more time domain correlation amplitude values corresponding to at least part of the different time intervals in the time domain correlation amplitude value set.

31. A communication device, comprising:

a processing module, configured to configure TRS bursts for a terminal for determining a time domain correlation amplitude value set, wherein the time domain correlation amplitude value set comprises time domain correlation amplitude values corresponding to different time intervals; and
a transceiver module, configured to receive one or more time domain correlation amplitude values corresponding to at least part of the different time intervals in the time domain correlation amplitude value set reported by the terminal.

32. A communication device, comprising a processor and a memory, the memory stores a computer program, the processor is configured to execute the computer program stored in the memory, causing the device to perform the method according to any one of claims 1 to 16.

33. A communication device, comprising a processor and a memory, the memory stores a computer program, the processor is configured to execute the computer program stored in the memory, causing the device to perform the method according to any one of claims 17 to 29.

34. A communication device, further comprising a processor and an interface circuit, wherein

the interface circuit is configured to receive code instructions and transmit the code instructions to the processor; and
the processor is configured to run the code instructions to execute the method according to any one of claims 1 to 16.

35. A communication device, further comprising a processor and an interface circuit, wherein

the interface circuit is configured to receive code instructions and transmit the code instructions to the processor; and
the processor is configured to run the code instructions to execute the method according to any one of claims 17 to 29.

36. A computer-readable storage medium for storing instructions that, when executed, enable the method according to any one of claims 1 to 16 to be implemented.

37. A computer-readable storage medium for storing instructions that, when executed, enable the method according to any one of claims 17 to 29 to be implemented.

**FIG. 1**

determining a time domain correlation amplitude value set based on TRS bursts configured by a network device, wherein the time domain correlation amplitude value set comprises time domain correlation amplitude values corresponding to different time intervals — S201

reporting, to the network device, one or more time domain correlation amplitude values corresponding to at least part of the different time intervals in the time domain correlation amplitude value set — S202

**FIG. 2**

$d$    $d$    • • •    t

TRS period T

TRS measurement window W

||| AP-TRS burst

||| P-TRS burst

**FIG. 2a**

receiving the TRS bursts configured by the network device and determining each of symbol positions comprising TRS resources in the TRS bursts ⟩ S301

determining time interval sets corresponding to the symbol positions respectively, wherein each time interval set comprises a plurality of different time intervals ⟩ S302

performing channel estimations based on the TRS resources corresponding to the symbol positions respectively to obtain estimated channel information corresponding to the symbol positions respectively ⟩ S303

determining the time domain correlation amplitude value set based on the estimated channel information and the time interval sets corresponding to the symbol positions respectively ⟩ S304

reporting, to the network device, one or more time domain correlation amplitude values corresponding to at least part of the different time intervals in the time domain correlation amplitude value set ⟩ S305

**FIG. 3**

determining a time domain correlation amplitude value set based on TRS bursts configured by a network device, wherein the time domain correlation amplitude value set comprises time domain correlation amplitude values corresponding to different time intervals ⟩ S401

counting occurrence frequencies of the different time intervals and sorting the occurrence frequencies; selecting, based on a sorting result, one or more first time intervals with occurrence frequencies greater than a predetermined frequency or with a high sorting sequence as the part of the different time intervals ⟩ S402

reporting, to the network device, the one or more time domain correlation amplitude values corresponding to the one or more first time intervals ⟩ S403

**FIG. 4**

determining a time domain correlation amplitude value set based on TRS bursts configured by a network device, wherein the time domain correlation amplitude value set comprises time domain correlation amplitude values corresponding to different time intervals ⟋ S501

sorting all the different time intervals in ascending order, and determining one ore more second time intervals comprising a minimum time interval and with a high sorting sequence as the part of the different time intervals ⟋ S502

reporting, to the network device, the one or more time domain correlation amplitude values corresponding to the second time intervals ⟋ S503

**FIG. 5**

determining a time domain correlation amplitude value set based on TRS bursts configured by a network device, wherein the time domain correlation amplitude value set comprises time domain correlation amplitude values corresponding to different time intervals ⟋ S601

determining a part of the TRS bursts from the TRS bursts configured by the network device as first TRS bursts ⟋ S602

reporting, to the network device, the time domain correlation amplitude values for different time intervals corresponding to the first TRS bursts ⟋ S603

**FIG. 6**

**FIG. 6a**

**FIG. 6b**

| | |
|---|---|
| determining a time domain correlation amplitude value set based on TRS bursts configured by a network device, wherein the time domain correlation amplitude value set comprises time domain correlation amplitude values corresponding to different time intervals | S701 |
| determining at least part of the differen time intervals from all of the differen time intervals as one ore more time intervals to be reported | S702 |
| obtaining quantization information of the one ore more time domain correlation amplitude values by quantizing the one or more time domain correlation amplitude values corresponding to the one ore more time intervals to be reported | S703 |
| reporting the quantization information of the one or more time domain correlation amplitude values to the network device | S704 |

**FIG. 7**

determining a time domain correlation amplitude value set based on TRS bursts configured by a network device, wherein the time domain correlation amplitude value set comprises time domain correlation amplitude values corresponding to different time intervals ⟋ S801

determining at least part of the differen time intervals from all of the differen time intervals as one ore more time intervals to be reported ⟋ S802

determining one ore more target intervals in which one or more time domain correlation amplitude values to be reported are located, and determining number of bits corresponding to each of the target intervals ⟋ S803

for each time domain correlation amplitude value, quantizing the each time domain correlation amplitude value based on the number of bits corresponding to the each time domain correlation amplitude value, to obtain quantization information of the each time domain correlation amplitude value ⟋ S804

sending the quantization information of the one or more time domain correlation amplitude values to the network device ⟋ S805

**FIG. 8**

*d=1slot*

TRS period T=20slots

TRS measurement window W=20slots

AP-TRS burst

P-TRS burst

**FIG. 9**

*d=5slot*

TRS period T=10slots

TRS measurement window W=20slots

t

AP-TRS burst

P-TRS burst

第一TRS burst

**FIG. 10**

configuring TRS bursts for a terminal for determining a time domain correlation amplitude value set, wherein the time domain correlation amplitude value set comprises time domain correlation amplitude values corresponding to different time intervals

S1101

receiving one or more time domain correlation amplitude values corresponding to at least part of the different time intervals in the time domain correlation amplitude value set reported by the terminal

S1102

**FIG. 11**

configuring TRS bursts for a terminal for determining a time domain correlation amplitude value set, wherein the time domain correlation amplitude value set comprises time domain correlation amplitude values corresponding to different time intervals

S1201

receiving the one or more time domain correlation amplitude values corresponding to one or more first time intervals reported by the terminal, and the one or more first time intervals are determined from all of the different time intervals based on occurrence frequencies of all of the different time intervals

S1202

**FIG. 12**

configuring TRS bursts for a terminal for determining a time domain correlation amplitude value set, wherein the time domain correlation amplitude value set comprises time domain correlation amplitude values corresponding to different time intervals

S1301

receiving the one or more time domain correlation amplitude values corresponding to one or more second time intervals reported by the terminal, and the one or more second time intervals are one or more time intervals including a minimum time interval and with a high sorting sequence that are selected after sorting all the different time intervals in ascending order

S1302

**FIG. 13**

configuring TRS bursts for a terminal for determining a time domain correlation amplitude value set, wherein the time domain correlation amplitude value set comprises time domain correlation amplitude values corresponding to different time intervals

S1401

receiving one or more time domain correlation amplitude values corresponding to first TRS bursts reported by the terminal, in which, the first TRS bursts are the part of the different time intervals determined by the terminal from the TRS bursts configured by the network device

S1402

**FIG. 14**

configuring TRS bursts for a terminal for determining a time domain correlation amplitude value set, wherein the time domain correlation amplitude value set comprises time domain correlation amplitude values corresponding to different time intervals

S1501

receiving quantization information of one or more time domain correlation amplitude values sent by the terminal

S1502

determining the one or more time domain correlation amplitude values based on the quantization information

S1503

**FIG. 15**

**FIG. 16**

**FIG. 17**

chip

processor — 1801

interface — 1802

memory — 1803

1800

**FIG. 18**

## INTERNATIONAL SEARCH REPORT

| International application No. |
|---|
| **PCT/CN2023/076607** |

### A. CLASSIFICATION OF SUBJECT MATTER

H04W72/0446(2023.01)i;  H04W24/10(2009.01)i;  H04L25/02(2006.01)i

According to International Patent Classification (IPC) or to both national classification and IPC

### B. FIELDS SEARCHED

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

WPABS, ENTXTC, CNTXT, ENTXT, 3GPP, CNKI: 信道状态信息, 反馈, 参考信号, 跟踪, 追踪, 时域, 信道, 特性, 开销, 突发, 幅度, 测量, 估计, 上报, 报告; Channel State Information, Feedback, Reference Signal, Tracking, Time Domain, Channel, Property, Overhead, Burst, Amplitude, Measurement, Estimation, Reporting

### C. DOCUMENTS CONSIDERED TO BE RELEVANT

| Category* | Citation of document, with indication, where appropriate, of the relevant passages | Relevant to claim No. |
|---|---|---|
| A | CN 114070677 A (BEIJING SAMSUNG TELECOM R&D CENTER et al.) 18 February 2022 (2022-02-18) description, paragraphs 0018-0067 | 1-37 |
| A | CN 112242887 A (CHINA MOBILE COMMUNICATION LTD., RESEARCH INSTITUTE et al.) 19 January 2021 (2021-01-19) entire document | 1-37 |
| A | CN 110391882 A (ZTE CORP.) 29 October 2019 (2019-10-29) entire document | 1-37 |
| A | CN 113179551 A (INTEL CORP.) 27 July 2021 (2021-07-27) entire document | 1-37 |
| A | WO 2021169976 A1 (VIVO MOBILE COMMUNICATION CO., LTD.) 02 September 2021 (2021-09-02) entire document | 1-37 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 November 2023** | **08 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/076607** |

### C.     DOCUMENTS CONSIDERED TO BE RELEVANT

| Category* | Citation of document, with indication, where appropriate, of the relevant passages | Relevant to claim No. |
|---|---|---|
| A | WO 2023010428 A1 (BEIJING XIAOMI MOBILE SOFTWARE CO., LTD.) 09 February 2023 (2023-02-09)<br>        entire document | 1-37 |
| A | INTERDIGITAL INC. "R1-1809087, On Downlink Signals and Channels for NR-U"<br>*3GPP TSG RAN WG1 Meeting #94,* 24 August 2018 (2018-08-24),<br>        entire document | 1-37 |

Form PCT/ISA/210 (second sheet) (July 2022)

**INTERNATIONAL SEARCH REPORT**
Information on patent family members

International application No.

**PCT/CN2023/076607**

| Patent document cited in search report | | | Publication date (day/month/year) | Patent family member(s) | | | Publication date (day/month/year) |
|---|---|---|---|---|---|---|---|
| CN | 114070677 | A | 18 February 2022 | US | 2022046448 | A1 | 10 February 2022 |
| | | | | WO | 2022030986 | A1 | 10 February 2022 |
| | | | | EP | 4193755 | A1 | 14 June 2023 |
| CN | 112242887 | A | 19 January 2021 | WO | 2021008432 | A1 | 21 January 2021 |
| CN | 110391882 | A | 29 October 2019 | WO | 2019201101 | A1 | 24 October 2019 |
| | | | | US | 2021167911 | A1 | 03 June 2021 |
| | | | | US | 11700094 | B2 | 11 July 2023 |
| CN | 113179551 | A | 27 July 2021 | | None | | |
| WO | 2021169976 | A1 | 02 September 2021 | WO | 2021169976 | A9 | 07 October 2021 |
| WO | 2023010428 | A1 | 09 February 2023 | CN | 113767696 | A | 07 December 2021 |

Form PCT/ISA/210 (patent family annex) (July 2022)